# EUROPÄISCHE PATENTSCHRIFT

(11) **EP 3 183 616 B1**
(45) Veröffentlichungstag und Bekanntmachung des Hinweises auf die Patenterteilung: **21.07.2021**
(21) Anmeldenummer: 15757134.0
(22) Anmeldetag: 17.08.2015
(51) Int. Cl.: G02C 13/00

(54) **ERMITTLUNG VON BENUTZERDATEN UNTER BERÜCKSICHTIGUNG VON BILDDATEN EINER AUSGEWÄHLTEN BRILLENFASSUNG**
DETERMINING USER DATA BASED ON IMAGE DATA OF A SELECTED EYEGLASS FRAME
DÉTERMINATION DE DONNÉES D'UTILISATEUR AVEC PRISE EN COMPTE DE DONNÉES D'IMAGE D'UNE MONTURE DE LUNETTES CHOISIE

(30) Priorität: 21.08.2014 DE 102014012452
(43) Veröffentlichungstag der Anmeldung: 28.06.2017
(73) Patentinhaber: Rodenstock GmbH, 80687 München (DE)
(72) Erfinder: TIEMANN, Markus, 81539 München (DE); SEITZ, Peter C., 80999 München (DE); SCHMID, Leo, 86911 Diessen am Ammersee (DE); MUSCHIELOK, Adam, 81369 München (DE)
(74) Vertreter: Müller-Boré & Partner Patentanwälte PartG mbB
(86) Internationale Anmeldenummer: PCT/EP2015/001691
(87) Internationale Veröffentlichungsnummer: WO 2016/026570

(56) Entgegenhaltungen:
- EP-A1- 1 450 201
- DE-A1-102009 004 383
- DE-A1-102011 115 239
- FR-A1- 2 772 936
- None

## Beschreibung

Die vorliegende Erfindung betrifft ein Verfahren, eine Vorrichtung und ein Computerprogrammprodukt zur verbesserten automatisierten Ermittlung individueller geometrischer Parameter für die Anpassung eines Brillenglases für einen Benutzer.

Um Brillengläser zur Korrektur eines Refraktionsfehlers herzustellen, wird seit langem eine rechnerische Optimierung der Brillenglasflächen für eine bestimmte Gebrauchssituation, also insbesondere einen zu erwartenden Objektabstand bzw. ein Objektabstandsmodell, und eine bestimmte Gebrauchsstellung des Brillenglases bzw. der Brillengläser, also eine bestimmte Stellung des Brillenglases bzw. der Brillengläser vor einem Auge bzw. vor den Augen eines Brillenträgers vorgenommen, bevor das Brillenglas gemäß der optimierten Flächen gefertigt wird. Die rechnerische Optimierung erfolgt dabei beispielsweise mittels Ray-Tracing, also einer Berechnung des Verlaufs von Lichtstrahlen vom Objektpunkt durch das Brillenglas bis zum entsprechenden Auge des Brillenträger oder einer entsprechenden Referenzfläche (z.B. Scheitelpunktkugel des Auges). Alternativ oder zusätzlich werden beispielsweise auch Verfahren mittels Wavefront-Tracing eingesetzt.

In jedem Fall ist für eine genaue Anpassung des Brillenglases die Kenntnis über dessen Position bzw. Stellung vor dem entsprechenden Auge des Brillenträgers erforderlich. Während früher für die Optimierung von Brillengläsern standardisierte Werte der Gebrauchsstellung auf Basis von Mittelwerten für verschiedene Benutzer (Brillenträger) und verschiedene Brillenfassungen herangezogen wurden, ist es aufgrund der mittlerweile deutlich erhöhten Rechenleistung der verfügbaren Optimierungssysteme und aufgrund erheblicher technologischer Fortschritte in den Optimierungsprozessen seit einiger Zeit möglich, die Gebrauchsstellung für jeden einzelnen Brillenträger individuell zu berücksichtigen. Hierzu ist es aber nun notwendig, die individuelle Gebrauchsstellung des Brillenglases in der gewünschten Fassung für den jeweiligen Benutzer möglichst genau und zuverlässig zu bestimmen. Fehler in der Bestimmung der individuellen Gebrauchsstellung führen unmittelbar zu einer Verschlechterung der Anpassung des Brillenglases.

Dabei ist die Gebrauchsstellung einer am Kopf eines Probanden (Benutzers) angeordneten Brille bzw. der in einer Brille angeordneten Brillengläser von einer Vielzahl von Parametern abhängig bzw. wird durch eine Kombination einer Vielzahl von Parametern beschrieben. So hängt die Gebrauchsstellung beispielsweise von der Pupillendistanz des Benutzers, dem Fassungsscheibenwinkel, der Brillenglasvorneigung, der Fassungsform, dem Hornhautscheitelabstand des Systems von Brille und Auge und der Einschleifhöhe der Brillengläser ab. Diese und weitere Parameter, welche zur Beschreibung der Gebrauchsstellung herangezogen werden können, bzw. notwendig sind, sind in einschlägigen Normen, wie beispielsweise der DIN EN ISO 1366, der DIN 58 208, der DIN EN ISO 8624 und der DIN 5340 enthalten und können diesen entnommen werden. Ferner ist es notwendig, dass die Brillengläser entsprechend den optischen Parametern, welche zur Herstellung verwendet wurden in einer Brillenfassung angeordnet bzw. zentriert werden, so dass die Brillengläser tatsächlich entsprechend den optischen Parametern in Gebrauchsstellung getragen werden.

Um die einzelnen optischen Parameter individuell zu bestimmen, stehen dem Optiker eine Vielzahl von Messgeräten zur Verfügung. Beispielsweise kann der Optiker mit einem sogenannten Pupillometer Pupillenreflexe auswerten bzw. den Abstand der Pupillenmitten bestimmen, um derart die Pupillendistanz zu ermitteln. Vorneigungswinkel und Hornhautscheitelabstand können beispielsweise mit einem Messgerät bestimmt werden, bei dem in habitueller Kopf- und Körperhaltung des Kunden das Messgerät an eine Fassungsebene einer Brillenfassung gehalten wird. Der Vorneigungswinkel kann seitlich über einen schwerkraftgetriebenen Zeiger anhand einer Skala abgelesen werden. Zur Bestimmung des Hornhautscheitelabstands wird ein eingraviertes Lineal benutzt, mit welchem der Abstand zwischen dem geschätzten Nutengrund der Brillenfassung und der Kornea ebenfalls von der Seite gemessen wird.

Der Fassungsscheibenwinkel der Brillenfassung kann beispielsweise mit einem Messgerät bestimmt werden, auf welches die Brille gelegt wird. Der nasale Rand einer Scheibe muss dabei über einem Drehpunkt eines beweglichen Messarms angeordnet werden, wobei die andere Scheibe parallel zu einer eingravierten Linie verläuft. Der Messarm wird so eingestellt, dass eine markierte Achse des Messarms parallel zu der Fassungsebene der darüber angeordneten Scheibe verläuft. Der Fassungsscheibenwinkel kann anschließend an dieser Skala abgelesen werden.

Einen wesentlichen Fortschritt bei der Bestimmung individueller Parameter, insbesondere auch von Parametern der individuellen Gebrauchsstellung ergaben sich mit der Entwicklung computergestützter Videozentriersysteme. Diese ermöglichen eine zum großen Teil automatisierte Überprüfung und Bestimmung der Position eines Brillenglases in Gebrauchsstellung vor dem Auge des Benutzers. Dabei werden mittels einer oder mehrerer Kameras vorzugsweise dreidimensionale Bilddaten eines Benutzers mit der gewünschten Brillenfassung in der individuellen Gebrauchsstellung erzeugt und für die Ermittlung der erforderlichen Parameter ausgewertet.

Um die erforderlichen Parameter für eine genaue Anpassung des herzustellenden Brillenglases möglichst genau ermitteln zu können, ist eine möglichst genaue Kenntnis der individuellen Position der Brillengläser bzw. des Fassungsrandes bzw. der Stützscheiben wünschenswert. Die Position des inneren Randes des Fassung bzw. des äußeren Randes der eingeschliffenen bzw. der herzustellenden Gläser bzw. Stützscheiben vor den Augen des Benutzers (Brillenträgers) muss zumindest an einigen relevanten oder markanten Punkten der Brillenfassung bestimmt werden. Hierzu existieren manuelle und (semi-) automatische Verfahren, mit deren Hilfe diese Position in den Bilddaten, welche mittels der genannten Videozentriersysteme erstellt wurden, ausgewählt und festgelegt wird. Solche markanten Punkte, welche einen direkten oder indirekten Rückschluß auf die Lage des herzustellenden Brillenglases erlauben, können beispielsweise markante Punkte der vom Brillenträger gewünschten Fassung sein, die der Brillenträger während der Erstellung der Bilddaten trägt. Insbesondere könnten hierfür Lichtreflexe am Fassungsrand herangezogen werden. Aber auch vorübergehend an der Brillenfassung angebrachte Markierungen (z.B. in Form von Messbügeln) könnten hierfür herangezogen werden.

Die manuelle Selektion des inneren Fassungsrandes in Aufnahmen von Videozentriersystemen ist auf Grund der Vielzahl der in Frage kommenden Kanten und des teilweise komplexen Verlaufs relativ zeitaufwändig und unter gewissen Voraussetzungen auch nur mit begrenzter Genauigkeit durchführbar. Die automatisierte Erkennung ist aus ähnlichen Gründen sowie aufgrund der Vielzahl von Fassungstypen (z.B. Bohrbrillen, Nylorbrillen, Vollrandfassungen aus Metall oder Kunststoff) oft ungenau, wenig stabil und fehleranfällig. Besonders schwierig ist erfahrungsgemäß die Erkennung bei Bohr- und Nylorbrillen in Bildaufnahmen von Videozentriersystemen, da hier die Außenkanten von transparenten Stützscheiben erkannt werden müssen.

Einen besonders effizienten Ansatz für eine möglichst präzise Auswertung der Form und Position des Randes des herzustellenden Brillenglases bzw. des Fassungsrandes aus den Bilddaten eines Videozentriersystems bietet beispielsweise DE 10 2009 004 383 A1. Darin wird eine spezielle Kombination aus Beleuchtungseinrichtungen und Bilderfassungseinrichtungen (Kameras) vorgeschlagen. Diese erlaubt durch die Erzeugung bzw. Verstärkung spezieller Reflexe an der Brillenfassung während der Aufnahme im Videozentriersystem eine verbesserte automatische bzw. vereinfachte manuelle Selektion der Fassungsränder. Allerdings hängt die Zuverlässigkeit und Genauigkeit dieses Systems stark von der Form und der Reflektivität der gewünschten Fassung ab. Vor allem wenn beispielsweise im Bereich einer Fassungsnut mehrere Reflexe gleichzeitig auftreten, kann dies die Genauigkeit der Bestimmung der Form und Position des herzustellenden Brillenglases und damit auch die Genauigkeit der Ermittlung der für die Anpassung des Brillenglases erforderlichen Parameter ungünstig beeinflussen.

Einen weitergehenden Ansatz zur Bestimmung von Benutzerdaten offenbart beispielsweise die DE 10 2011 115 239 A1. Darin wird vorgeschlagen, einen sogenannten Tracerdatensatz, der bisher nur zum Randen, also zum Einschleifen des zu fertigenden Brillenglases in die gewünschte Fassung diente, auch bereits zum leichteren Auffinden von Konturpunkten des Randes des zu fertigenden Brillenglases in Benutzerbilddaten, welche von einem Videozentriersystem erzeugt wurden, einzusetzen. Dazu ist es notwendig, diese Tracerdaten bereits im Vorfeld für die ausgewählte Brillenfasssung mit Hilfe eines sogenannten Tracers, d.h. einer Vorrichtung zum mechanischen oder optischen Abtasten der Brillenfassung oder der Stützscheibe, zur Verfügung zu stellen.

Vor diesem Hintergrund ist es eine Aufgabe der vorliegenden Erfindung, die Bestimmung der für die Anpassung eines herzustellenden Brillenglases erforderlichen individuellen Parameter für die Gebrauchsstellung noch einfacher und präziser zu gestalten. Diese Aufgabe wird durch ein Verfahren und eine Vorrichtung mit den in den unabhängigen Ansprüchen angegebenen Merkmalen gelöst. Bevorzugte Ausführungsformen sind Gegenstand der abhängigen Ansprüche.

Somit bietet die Erfindung in einem Aspekt ein Verfahren zum Ermitteln von Benutzerdaten für die Herstellung eines Brillenglases zu einer ausgewählten Brillenfassung für einen Benutzer. Das Verfahren umfasst dabei ein Bereitstellen eines Brillenfassungsbilddatensatzes der ausgewählten Brillenfassung. Unter einem Bilddatensatz im Sinne dieser Beschreibung wird ein Satz digitaler, d.h. binär codierte Daten verstanden, welcher beispielsweise bei der Aufnahme eines Bildes mit Hilfe einer Digitalkamera erzeugt werden und durch eine Digital-Analog-Umwandlung visuell als Bild bzw. Foto dargestellt werden kann. Entsprechend ist ein Brillenfassungsbilddatensatz im Sinne der vorliegenden Erfindung ein Satz binär codierte Daten einer Brillenfassung, welche durch Fotografieren der Brillenfassung (also solche oder auch mit Stützscheiben und/oder Brillengläser versehen) losgelöst von Bilddaten eines Benutzers (Brillenträgers) erzeugt werden kann. Der Brillenfassungsbilddatensatz wird also unabhängig von weiteren Bilddaten eines Videozentriersystems, insbesondere unabhängig von den später noch beschriebenen Benutzerbilddaten, erzeugt. Der Brillenfassungsbilddatensatz kann auch noch zusätzliche Daten, beispielsweise Maße bzw. Abmessungen von zumindest Teilen der Brillenfassung und/oder Daten zu einer Skalierung und oder Daten zu einem Skalierungsfaktor umfassen.

Vorzugsweise wird der Brillenfassungsbilddatensatz in einem Datenspeicher einer erfindungsgemäßen Vorrichtung für die spätere Verwendung zur Auswertung von Benutzerbilddaten hinterlegt. Alternativ oder zusätzlich steht eine Brillenfassungsbilddatenerfassungseinrichtung mit einem Videozentriersystem zur Übertragung des Brillenfassungsbilddatensatz in Signalverbindung, so dass der Brillenfassungsbilddatensatz für die nachfolgende Auswertung individueller Parameter der Gebrauchsstellung für das herzustellende Brillenglas aus den Benutzerbilddaten herangezogen werden kann.

Außerdem umfasst das Verfahren ein Erfassen von Benutzerbilddaten zumindest eines Teilbereichs des Kopfes des Benutzers zusammen mit zumindest einem Teil der vom Benutzer getragenen, ausgewählten Brillenfassung. Es werden also Bilddaten eines Teilbereichs des Kopfes, insbesondere einschließlich der Augenpartie, des Benutzers zusammen mit der ausgewählten Brillenfassung in der individuellen Gebrauchsstellung erzeugt. Dieser Schritt kann analog zur Bilddatenerfassung in herkömmlichen Videozentriersystemen erfolgen. Vorzugsweise werden die Benutzerbilddaten mittels einer oder mehrerer Digitalkamera(s) erzeugt. Dabei wird dem Benutzer beispielsweise zumindest eine Blickrichtung und/oder zumindest eine Kopfhaltung und/oder eine Kopfposition vorgegeben, um einerseits mittels einer vorgegebenen montierten Benutzerbilderfassungseinrichtung (Kamera) alle erforderlichen Gesichtspartien erfassen zu können und andererseits den Benutzer zu einer habituellen Kopfhaltung zu bewegen.

Nachdem im Allgemeinen aber weder die genaue individuelle Kopfhaltung noch die individuelle Gebrauchsstellung der Brillenfassung bzw. der Brillengläser vor den Augen des Benutzers vorgeschrieben werden oder vorab bekannt sind, ist auch die Position und Lage der in den Benutzerbilddaten (z.B. eines Videozentriersystems) abgebildeten, gewünschten Brillenfassung vorab nicht (genau) bekannt. Sowohl die manuelle als auch die automatische Selektion des Glasrandes bzw. der Glasränder aus den Benutzerbilddaten nach der herkömmlichen Vorgehensweise birgt die eingangs erwähnten Schwächen eines hohen Aufwands bzw. einer teilweise nicht unbeträchtlichen Ungenauigkeit.

Das erfindungsgemäße Verfahren hingegen umfasst nun - anders als herkömmliche Verfahren - ein Suchen bzw. Aufsuchen der Pupillen des Benutzers in den Benutzerbilddaten und ein Ermitteln eines Pupillendatensatzes. Der Pupillendatensatz umfasst vorzugsweise Ortsangaben bzw. Koordinaten der Pupillen. Der Pupillendatensatz kann aber alternativ oder zusätzlich auch andere Daten zu den Pupillen des Benutzers, wie beispielsweise der Größe oder Form der Pupillen, oder des relativen Abstands der Pupillen umfassen.

Das Suchen der Pupillen kann z.B. in einem ersten Schritt ein Suchen von Bereichen umfassen, welche eine relativ hohe Textur aufweisen. So haben beispielsweise Stirn und Wange eine relativ geringe Textur, während die Augen und auch die Augen mit aufgesetzter Brille eine höhere Texturierung aufweisen. In den Regionen höherer Textur kann dann in einem zweiten Schritt nach kreisförmigen Strukturen gesucht werden. Dabei können unterschiedliche Pupillenmodelle verwendet werden. Beispielsweise kann als Pupillenmodell ein geschlossener Kreis verwendet werden, um eine komplett sichtbare Iris zu finden. Alternativ oder zusätzlich können als Pupillenmodell ein oder mehrere abgeschnittene Kreise verwendet werden, um eine Suche nach einer Iris zu ermöglichen, die durch ein Lid teilweise abgedeckt ist. Wird eine kreisförmige Struktur gefunden, so kann z.B. deren Mittelpunkt als Pupillenmittelpunkt angenommen werden. Alternativ oder zusätzlich kann ein Mittelpunkt durch Fitten einer Fläche zweiter Ordnung in ein Graubild der kreisförmigen Stuktur angenommen werden. Die Pupille ist innerhalb der Iris sehr dunkel und mit der Iris steigt die Intensität nach außen innerhalb des kreisförmigen Bereiches an. Allgemein kann es vorteilhaft sein, die Analysen in Grauwertbildern durchzuführen, um den Einfluss von Haut und Augenfarbe zu minimieren.

Nachdem die Pupillen gesucht und ein entsprechender Pupillendatensatz ermittelt wurde, erfolgt sodann ein Ermitteln von Konturpunkten des Randes des zu fertigenden Brillenglases in den Benutzerbilddaten anhand des Brillenfassungsbilddatensatzes und des Pupillendatensatzes. Der Pupillendatensatz, d.h. insbesondere die Koordinaten und/oder der relative Abstand der Pupillen dient dabei zum Suchen bzw. Finden der Brillenfassung in den Benutzerbilddaten. Mit dem Pupillendatensatz wird der Suchbereich eingeschränkt, was eine schnellere Suche ermöglicht. Vorzugsweise wird der Pupillendatensatz in einem Datenspeicher einer erfindungsgemäßen Vorrichtung für die spätere Verwendung zur Auswertung von Benutzerbilddaten hinterlegt.

Beim Ermitteln von Konturpunkten des Randes des zu fertigenden Brillenglases in den Benutzerbilddaten werden insbesondere diejenigen Bildpunkte der Benutzerbilddaten als Konturpunkte ermittelt, die zusammen eine geometrische Form beschreiben, welche durch Translation und/oder Rotation und/oder Skalierung und/oder Projektion (z.B. Parallelprojektion oder projektive Translation) aus der im Brillenfassungsbilddatensatz erkennbaren Form des Verlaufs des Randes des herzustellenden Brillenglases hervorgeht, und die sich in ihrer Gesamtheit in Kontrast und/oder Farbe von ihrer Umgebung abheben. Dies erfolgt durch eine computergestützte Bilderkennung. Dabei wird insbesondere durch eine Mustersuche ("pattern matching") oder ein "template matching" in den Benutzerbilddaten die Form des Fassungsrandes oder einer Stützscheibe als Bildelement gesucht, wobei der Brillenfassungsbilddatensatz das zu suchende Muster bzw. Template beschreibt.

Auch wenn das Suchen der Pupillen im Vergleich zu herkömmlichen Verfahren, einen zusätzlichen Schritt bedeutet, so kann das erfindungsgemäße Verfahren insgesamt effektiver, schneller und zuverlässiger durchgeführt werden. Dies liegt insbesondere daran, dass sich bei herkömmlichen Verfahren auf Grund des geringen Kontrasts der Brillenfassung gegenüber der Umgebung die Suche relativ aufwendig gestaltet. Dagegen bieten die Pupillen des Probanden einen sehr guten Kontrast gegenüber der Umgebung, was das Auffinden der Pupillen sehr einfach und schnell macht. Mit Hilfe der dadurch ermittelten Pupillendaten kann schließlich das Auffinden der Brillenfassung, bzw. Teilen davon, in den Benutzerbilddaten deutlich beschleunigt werden, so dass insgesamt sogar eine deutliche Zeitersparnis erreicht werden kann.

Des Weiteren kann auch das Suchen bzw. Finden der Pupillen des Probanden computergestützt bzw. automatisch unter Verwendung entsprechender Bilderkennungsalgorithmen durchgeführt werden, so dass der zusätzliche Schritt des Suchens der Pupillen zeitlich nicht ins Gewicht fällt.

Anders als in herkömmlichen Verfahren ist bei der erfindungsgemäßen Vorgehensweise auch keine freie Suche nach relevanten Punkten oder einer Konturlinie eines Brillenglasrandes oder eines (inneren) Brillenfassungsrandes mit a *priori* unbekannter Form erforderlich, die je nach Kontrast der Benutzerbilddaten im Einzelfall durchaus fehlerhaft und/oder unvollständig sein kann. Stattdessen werden aus dem Brillenfassungsbilddatensatz bereits genau bekannte Eigenschaften bzw. Charakteristiken der Brillenfassung, wie beispielsweise Formverlauf, Farbe, Konturstärke, evtl. vorhandene Muster usw. herangezogen, um in den Benutzerbilddaten nach Bildstrukturen zu suchen, die - bis auf entsprechende Transformationen (z.B. Translation, Rotation) - diesen bekannten Eigenschaften bzw. Charakteristiken entsprechen. Damit können durch die Verwendung des Brillenfassungsbilddatensatzes sehr zuverlässig und präzise sogar Lücken in dem in den Benutzerbilddaten erkennbaren Randverlauf des Brillenglases bzw. der Fassung, welche aufgrund lokal geringen Kontrasts in den Benutzerbilddaten auftreten, überbrückt werden. Außerdem wird durch die Bereitstellung des Brillenfassungsbilddatensatzes eine höhere Genauigkeit bei der Bestimmung der exakten Position des herzustellenden Brillenglases erreicht, da beispielsweise irreführende Reflexe des Fassungsrandes z.B. aufgrund der Ausprägung der Nut mit nahe beieinander liegende Kanten zuverlässiger erkannt und ausgemustert werden können.

Die vorliegende Erfindung verbessert damit die Sicherheit und die Genauigkeit bei der insbesondere automatisierten Selektion im Vergleich zu den bekannten Verfahren - auch unter ungünstigen Bedingungen. Insbesondere kann anhand des Brillenfassungsbilddatensatzes nicht nur der Formverlauf des Brillenglases herangezogen werden, sondern auch weitere Eigenschaften bzw. Charakteristiken wie z.B. die Farbgestaltung, die Strukturierung, gegebenenfalls vorhandene Muster, die Brillenrandstärke und/oder andere markante Merkmale der Brillenfassung, die mittels Bilddaten erfassbar sind. Die Bereitstellung eines Brillenfassungsbilddatensatzes stellt somit hinsichtlich Präzision und Zuverlässigkeit im Vergleich zur Bereitstellung eines Tracerdatensatzes, der sich lediglich aus Koordinaten für den Randverlauf der zu fertigenden Brillengläser zusammensetzt, einen wesentlichen Vorteil dar. Auch für bestimmte Anwendungen bei der Farb- oder Veredelungsberatung im Rahmen der Fassungsberatung, dem Erfassen der Form zur Mittendickenminimierung oder der Bestimmung der Position zusätzlicher Elemente wie Insets oder sichtbaren Markenzeichen bietet die Erfindung durch die sehr genaue Bestimmung der vollständigen Form und Lage des Brillenglasrandes in den Benutzerbilddaten einen wesentlichen Vorteil.

Die Erfinder erkannten, dass die erfindungsgemäße Vorgehensweise durch das Heranziehen des vorgeschlagenen Brillenfassungsbilddatensatz beim Ermitteln des Brillenglasrandes in den Benutzerbilddaten nicht nur zu einer wesentlichen Verbesserung der Präzision und Zuverlässigkeit führt, sondern andererseits für den Optiker in aller Regel auch keinen besonderen zusätzlichen Aufwand, sondern gegebenenfalls lediglich eine Umstellung seines Arbeitsablaufs bedeutet. Insbesondere können aus dem Brillenfassungsbilddatensatz auch die für das Einschleifen des Brillenglases notwendigen Tracerdaten ermittelt werden, so dass die bisher notwendige Vermessung des Brillenglases oder der Stützscheiben mit Hilfe eines Tracers entfallen kann. Vorzugsweise umfasst das Verfahren nach dem Fertigen der optischen Flächen des Brillenglases ein Schleifen des Randes des Brillenglases, also ein Randen des Brillenglases, gemäß dem durch einen Tracer gemessenen oder aus dem Brillenfassungsbilddatensatz ermittelten Tracerdatensatz.

Vorzugsweise umfasst das Ermitteln von Konturpunkten des Randes des zu fertigenden Brillenglases ein Suchen bzw. Aufsuchen von zumindest einem Teil der Brillenfassung, insbesondere des Stegs der Brillenfassung, in den Benutzerbilddaten anhand des Brillenfassungsbilddatensatzes. Vorteihafterweise erfolgt die Suche nach dem Steg der Brillenfassung in einem Bildbereich zwischen den Pupillen des Benutzers bzw. vorteilhafterweise kann die Suche nach dem Steg der Brillenfassung auf einen Bildbereich zwischen den Pupillen des Benutzers eingeschränkt werden. Dies macht die Suche effektiver und schneller.

Die Suche nach der Brillenfassung im Bild kann sich insbesondere bei randlosen oder Nylorfassungen in einem ersten Schritt auf die Suche nach dem Steg der Fassung zwischen den Gläsern beschränken, da dieser sich gut vom Rest des Bildes abhebt und somit in einfacher Weise automatisch gesucht werden kann. Die Suche nach dem Steg, der vorher aus dem Brillenfassungsbilddatensatzes extrahiert werden kann, z.B. durch Markieren und/oder Einrahmen des Stegs im Bild durch den Benutzer, ist vor allem deshalb vorteilhaft, da der Steg in der Regel nicht, z.B. durch Haare des Probanden, verdeckt ist. Darüber hinaus ist bekannt, dass sich der Steg der Brillenfassung zwischen den beiden Pupillen befinden muss, so dass der Suchbereich des Bildes entsprechend eingeschränkt werden kann, was eine hohe Zeitersparnis bedeutet. Dies führt somit zu einer schnelleren und treffsichereren Suche.

Das Ermitteln eines Pupillendatensatzes umfasst ein Detektieren des Pupillenabstands. Ferner erfolgt das Ermitteln von Konturpunkten des Randes des zu fertigenden Brillenglases mit Hilfe eines Skalierungsfaktors, welcher anhand eines Vergleichs des detektierten Pupillenabstandes mit einer Standardvorgabe, insbesondere einem vorbekannten Durchschnittswert, für den Pupillenabstand abgeschätzt wird. Der Skalierungsfaktor ist ein Umrechnungsfaktor zwischen einem Maß und/oder zwischen Abmessungen in den Brillenfassungsbilddaten und einem Maß und/oder Abmessungen in den Benutzerbilddaten. Mit Hilfe des Skalierungsfaktors ist es somit möglich, die

Benutzerbilddaten mit den Brillenfassungsbilddaten, insbesondere auch hinsichtlich bestimmter Abmessungen der Brillenfassung, zu vergleichen bzw. in Bezug zu setzen. Der Skalierungsfaktor kann dadurch abgeschätzt werden, dass für den detektierten Pupillenabstand ein Standardwert, d.h. die Standardangabe, für den Pupillenabstand angenommen wird. Somit ist es möglich, dass relativen Längen, beispielsweise Teilen der Brillenfassung und/oder einem Pixelabstand in den Benutzerbilddaten, jeweils eine absolute bzw. reale Länge zugeordnet werden kann. Bei Kenntnis entsprechender absoluter bzw. realer Längen in den Brillenfassungsbilddaten, d.h. bei Kenntnis z.B. der absoluten bzw. realen Abmessungen bzw. Längen entsprechender Teile der Brillenfassung und/oder eines Pixelabstands in den Brillenfassungsbilddaten, kann der Skalierungsfaktor bestimmt werden. Der Skalierungsfaktor gibt somit das Verhältnis des Maßes bzw. der Abmessungen von zumindest Teilen der Brillenfassung in den Benutzerbilddaten zum Maß bzw. zu Abmessungen von entsprechenden Teilen der Brillenfassung in den Brillenfassungsbilddaten an. Insbesondere gibt der Skalierungsfaktor das Verhältnis des Pixelabstands in den Benutzerbilddaten zu dem Pixelabstand in den Brillenfassungsbilddaten an. Der Skalierungsfaktor ergibt sich insbesondere aus der Suche der Brillenfassung im Benutzerbild bzw. in den Benutzerbilddaten. Der Skalierungsfaktor kann mit Hilfe eines Bildverarbeitungsalgorithmus bestimmt und gegebenenfalls ausgegeben werden. Der Skalierungsfaktor gibt insbesondere an, um wie viel die Brillenfassung skaliert werden muss, damit sie im Benutzerbild bzw. in den Benutzerbilddaten die richtige Größe hat. Bei bekanntem Skalierungsfaktor kann die Suche nach der Brillenfassung in den Benutzerbilddaten einfacher, effektiver und schneller durchgeführt werden.

Der Skalierungsfaktor kann zunächst über die Annahme abgeschätzt werden, dass ein mittlerer Pupillenabstand von etwa 64 mm, was der Standardvorgabe für den Pupillenabstand entspricht, vorliegt. Ein derart abgeschätzter Skalierungsfaktor wird im Rahmen dieser Beschreibung auch als Vorskalierungsfaktor bezeichnet. Ein möglicher Wertebereich des tatsächlichen Skalierungsfaktors kann somit eingeschränkt bzw. begrenzt werden, da bekannt ist, dass der Abstand realer Pupillen immer in einem Bereich zwischen 30 mm und 90 mm liegt. Der mögliche Wertebereich des tatsächlichen Skalierungsfaktors in einer automatischen Suche kann dann auf den Bereich von ca. 0,5 -1,5 zum ermittelten Vorskalierungsfaktor eingeschränkt werden. Dadurch, dass sich die Benutzerbilddatenerfassung im Wesentlichen auf das Gesicht des Probanden beschränkt, kann der Wertebereich des Skalierungsfaktors auch entsprechend Standardvorgaben für das Gesicht eines Probanden beschränkt werden. Insbesondere kann angenommen werden, dass das aufgenommene Benutzerbild einen realen Bereich mit Längen und Breiten zwischen 0,1 m bis 1 m abdeckt. Aus dem Verhältnis dieser Längenmaße, d.h. 0,1 m bis 1 m, und der realen Größe des Brillenfassungsbildes kann der mögliche Wertebereich des Skalierungsfaktors eingeschränkt werden. Die Bestimmung der realen Maße bzw. Abmessungen der Brillenfasssung, oder zumindest Teilen davon, in dem Brillenfassungsbilddatensatz und damit der Größe des Brillenfassungsbildes kann beispielsweise mit Hilfe einer geeignet angebrachten Skalierung bei der Brillenfassungsbilddatenaufnahme erfolgen.

Bei der Suche nach der Brillenfassung in den Benutzerbilddaten können Verfahren der Bildverarbeitung, beispielsweise Kantenfindung, zum Einsatz kommen. Es ist auch möglich, ein Verfahren, das die Vollständigkeit einer Kontur gewährleistet, einzusetzen, um die Umrisse der Brillenfassung für die beiden Gläser zu ermitteln, z.B. mittels des sogenannten Snake-Algorithmus. Bei randlosen Brillenfassungen kann auch nur eine Erkennung der nicht transparenten Bauteile, wie z.B. der Nasensteg oder die Backen, erfolgen.

Vorzugsweise umfasst das Verfahren außerdem ein Ermitteln zumindest eines ausgezeichneten Punktes eines Auges des Benutzers aus den Benutzerbilddaten und ein Ermitteln von individuellen Parameter der Gebrauchsstellung aus der Lage der ermittelten Konturpunkte relativ zu dem zumindest einen ausgezeichneten Punkt. Es wird damit in besonders präziser und zuverlässiger Weise die Position des Brillenglases relativ zum Kopf des Benutzers, insbesondere relativ zum entsprechenden Auge, vorzugsweise relativ zur Pupille oder der Kornea bestimmt. Da durch die erfindungsgemäße Ermittlung der Konturpunkte die Gebrauchsstellung sehr viel genauer ausgewertet werden kann, wirkt sich dies auch auf die Präzision der optischen Anpassung des herzustellenden Brillenglases positiv aus.

In einer bevorzugten Ausführungsform umfasst der zumindest eine ausgezeichnete Punkt zumindest einen der folgenden Punkte: die Pupillenmitte, den Hornhautscheitel, zumindest einen optisch ausgezeichneten Punkt der Iris, zumindest einen optisch ausgezeichneten Punkt der Lederhaut. Die individuellen Parameter, welcher aus der Lage der ermittelten Konturpunkte des Brillenglasrandes relativ zu dem zumindest einen ausgezeichneten Punkt ermittelt werden umfassen vorzugsweise einen oder mehrere der folgenden Parameter:
- Position eines oder beider Brillengläser im dreidimensionalen Raum, insbesondere relativ zu dem Kopf und/oder relativ zu dem entsprechenden Auge und/oder relativ zu der entsprechenden Pupille des Benutzers, insbesondere bei einer vorgegebenen Blickausrichtung (z.B. Nullblickrichtung);
- Hornhaut-Scheitelabstand, insbesondere nach Bezugspunktforderung und/oder nach Augendrehpunktforderung;
- monokularer Zentrierpunktabstand;
- Zentrierpunktkoordinaten;
- Dezentration des Zentrierpunkts;
- Brillenglasvorneigung;
- Einschleifhöhe.

Alternativ oder zusätzlich werden aus den Benutzerbilddaten vorzugsweise auch weitere Parameter der Gebrauchsstellung ermittelt, welche insbesondere nicht von dem zumindest einen ausgezeichneten Punkt abhängen. Diese weiteren Parameter umfassen vorzugsweise einen oder mehrere der folgenden Parameter:
- Scheibenabstand;
- Scheibenmittenabstand;
- Fassungsscheibenwinkel.

Alternativ können diese weiteren Parameter auch bereits durch den Brillenfassungsbilddatensatz festgelegt sein.

Vorzugsweise umfasst das Bereitstellen eines Brillenfassungsbilddatensatzes der ausgewählten Brillenfassung ein Erfassen von Bilddaten der ausgewählten Brillenfassung vor einer vorgegebenen Bildhintergrundfläche. Die Bildhintergrundfläche hebt sich vorteilhafterweise farblich von der aufzunehmenden Brillenfassung ab, so dass kontrastreiche und damit detailreiche Bilddaten aufgenommen werden können. Die Bildhintergrundfläche kann homogen, vorzugsweise in einer zur Brillenfassung kontrastierenden Farbe, beispielsweise weiß, gewählt sein. Die Bildhintergrundfläche kann auch mit Markierungen und/oder Muster versehen sein. Diese können beispielsweise als Skalierung bzw. Maßstab dienen, um die absolute Größe bzw. Abmessungen der aufgenommenen Brillenfassung, oder von Teilen davon, zu bestimmen. Mit Hilfe verschiedene Muster der Bildhintergrundfläche kann insbesondere auch das automatische Auffinden der Brillenfassung mittels Bildbearbeitungsalgorithmen vereinfacht bzw. verbessert werden.

Das Verfahren kann ferner ein Bestimmen und/oder Bereitstellen des Maßes und/oder der Abmessungen von zumindest Teilen der Brillenfassung anhand einer Skalierung umfassen.

Durch die Skalierung kann ein bekannter Pixelabstand eines aufgenommenen Kamerabildes in reale Längen umgerechnet werden. Folglich ist es möglich, das absolute bzw. reale Maß bzw. die absoluten bzw. realen Abmessungen der Brillenfassung zu bestimmen.

Die Skalierung kann an der Bildhintergrundfläche, vorzugsweise neben der zu platzierenden Brillenfassung angebracht sein. Die Skalierung kann ein Metermaß bzw. einen Maßstab, Markierungen bestimmter Größe und/oder ein bekanntes bzw. vorbestimmtes Muster umfassen. Die Skalierung kann im Wesentlichen in einer Brillenfassungsebene, d.h. in einer Brillenglasebene, die von Musterstützscheiben und/oder Mustergläsern der Brillenfassung aufgespannt wird oder in einer Brillenbügelebene, die von den ausgeklappten Brillenbügel aufgespannt wird, liegen.

Bei bekanntem Abstand einer Kamera zur Brillenfassung kann die Skalierung auch über eine Kalibrierung der Kamera erfolgen bzw. erhalten werden, bzw. die Skalierung kann in einer anderen Ebene angebracht sein und anhand der bekannten Distanz zur Brillenfassungsebene korrigiert bzw. angepasst werden.

Die Skalierung ist vorzugsweise derart ausgebildet bzw. angeordnet, dass sie ein Metermaß bzw. einen Maßstab in zumindest einer Raumrichtung bereitstellt. Vorzugsweise ist die Skalierung derart ausgebildet bzw. angeordnet, dass sie ein Metermaß bzw. einen Maßstab in zwei, vorzugsweise zueinander orthogonalen, Raumrichtungen bereitstellt, welche die Brillenglasebene aufspannen.

Die Skalierung hat vorzugsweise eine Größe im Bereich von ca. 50 mm bis ca. 150 mm. Eine größere Skalierung erlaubt eine Bestimmung des Maßes bzw. der Abmessungen der Brillenfassung mit kleinerem Fehler und ist daher vorzuziehen. Die Skalierung weist vorzugsweise einen Kontrast derart auf, dass sie in dem von der Kamera aufgenommenem Bild, idealerweise automatisch, erkannt wird und eine Zuordnung von Pixelabständen zu realen Abständen in der Ebene der Skalierung berechnet werden kann.

Die Skalierung kann z.B. durch gängige Druckverfahren aufgebracht werden, oder durch Materialbearbeitung wie Fräsen, Bohren und/oder Ätzen. Die Skalierung kann auch durch funktionale Elemente realisiert sein, wie z.B. durch die Öffnungen zum Durchlass der Brillenbügel, um die Brillenfassung Plan zu positionieren.

Das Bereitstellen des Brillenfassungsdatensatzes kann das Erstellen eines sogenannten Shape-Modells der Brillenfassung umfassen. Das Shape-Modell beschreibt bzw. modelliert die Konturen der Brillenfassung und kann für die anschließende Suche der Brillenfassung in den Benutzerbilddaten verwendet werden. Durch die Skalierung in dem Brillenfassungsbilddatensatz ist die reale Größe des Shape-Modells der Brillenfassung bekannt. Vorzugsweise wird in dem Brillenfassungsbilddatensatz auch eine Ausrichtung der Lage der Brillenfassung zum Skalierungselement bzw. zur Skalierung, und damit eine Winkellage der Brillenfassung, bestimmt.

Vorzugsweise sind in die Brillenfassung bei der Aufnahme der Brillenfassungsbilddaten Musterstützscheiben und/oder Mustergläser montiert. Solche Musterstützscheiben bzw. Mustergläser weisen in der Regel keine optische Wirkung auf und werden in der Brillenberatung zum Zwecke der Anprobe an den Benutzer eingesetzt. In einer bevorzugten Ausführungsform kann die mit Musterstützscheiben und/oder Mustergläser versehene Brillenfassung mit Licht beleuchtet werden, welches von den Musterstützscheiben und/oder den Mustergläsern der Brillenfassung erkennbar oder merklich oder im Wesentlichen absorbiert wird. Mit anderen Worten werden die Musterstützscheiben und/oder Mustergläser mit Licht beleuchtet, das einen Wellenlängenbereich aufweist, in welchem die Musterstützscheiben und/oder die Mustergläser erkennbar oder merklich oder im Wesentlichen absorbierende Eigenschaften haben. Beispielsweise wird zum Beleuchten Licht verwendet, bei dem der Absorptionsgrad der Musterstützscheiben und/oder Mustergläser größer 5%, vorzugsweise größer 10%, noch bevorzugter größer 25%, noch bevorzugter größer 50% und am bevorzugtesten größer 75% beträgt. Auf diese Weise ist es möglich, die Form der Musterstützscheiben und/oder der Mustergläser zu detektieren, was vor allem bei randlosen Brillenfassungen von großem Vorteil ist.

Vorzugsweise erfolgt das Erfassen der Bilddaten der ausgewählten Brillenfassung mit Hilfe von zumindest einer Kamera aus unterschiedlichen Winkeln. Dies ermöglicht z.B. eine Ermittlung des Fassungsscheibenwinkels. Beispielsweise können mehrere Kameras (z.B. zwei) zum Einsatz kommen, die jeweils aus verschiedenen Positionen bzw. Blickwinkeln ein Bild der Brillenfassung aufnehmen. Alternativ kann auch nur eine Kamera eingesetzt werden, wobei zusätzlich eine geeignete Einspiegelung einer zweiten Ansicht in die eine Kamera erfolgt. Es können beliebige Digitalkameras (z.B. auch ein Handy oder Tablet) verwendet werden. Die Entfernung der zumindest einen Kamera zur Brillenfassung ist vorzugsweise so gewählt, dass die Auflösung der Kamera ausreicht, um die Brillenfassung mit einer Auflösung von etwa 0,2 mm, bevorzugt von etwa 0,1 mm oder besser aufzunehmen.

Das Bildfeld der Kamera ist vorzugsweise an typische Brillenfassungsgrößen angepasst und hat entlang einer langen Seite eine Ausdehnung von ca. 200 mm bis 250 mm. Bei einer starken Verzeichnung der eingesetzten Kameraoptik kann es von Vorteil sein, ein größeres Bildfeld zu wählen und die Randbereiche der Kamera ungenutzt zu lassen. Dadurch kann der Fehler, der durch ein räumlich getrenntes Ablesen der Markierung und der Brillenfassungsausmaße entsteht, verkleinert werden. Vorzugsweise wird zudem die vorhandene Verzeichnung der Kameraoptik durch eine innere Kalibrierung korrigiert.

Bei der Aufnahme der Brillenfassung von vorne, d.h. bei der Aufnahme der Brillenfassung durch eine Kamera, dessen optische Achse senkrecht zu den Flächen von Musterstützscheiben und/oder Mustergläsern ausgerichtet ist, wird vorteilhafterweise nicht der innere Fassungsrand in der Nut ermittelt, wie dies bei Tracern üblich ist. Zudem ist vorteilhafterweise weder eine zeitliche noch räumliche Relation der Aufnahme der Brillenfassung zu dem Kunden, dessen individuelle Parameter ermittelt werden sollen, erforderlich. Dies bedeutet insbesondere, dass der Kunde beim Tragen der Fassung zur Vermessung keine sonstigen Gerätschaften trägt, durch die er in seiner habituellen Kopf- und Körperhaltung gestört werden kann. Es ist zudem auch möglich, die Aufnahme der Brillenfassung erst nach dem Erfassen von Benutzerbilddaten des Probanden anzufertigen und auszuwerten, um die individuellen Parameter zu bestimmen. Mit anderen Worten können die Schritte Bereitstellen eines Brillenfassungsbilddatensatzes und Erfassen von Benutzterbilddaten in umgekehrter Reihenfolge durchgeführt werden.

Vorzugsweise umfasst das Verfahren außerdem ein Optimieren des Brillenglases für die ermittelte Gebrauchsstellung. Dabei wird eine computergestützte Berechnung der optischen Flächen (bzw. zumindest einer der optischen Flächen, also Vorder- und/oder Rückfläche) des herzustellenden Brillenglases durchgeführt. Dies kann in an sich bekannter Weise mit herkömmlichen Optimierungsalgorithmen beispielsweise auf Basis von Ray-Tracing- und/oder Wavefront-Tracing-Verfahren in iterativer Weise unter Minimierung einer Zielfunktion erfolgen. Daher muss hierauf an dieser Stelle nicht näher eingegangen werden. Allerdings erfolgt die Optimierung des Brillenglases oder der Brillengläser jetzt auf Basis der Gebrauchsstellung, die mittels der vorliegenden Erfindung sehr viel präziser und zuverlässiger ermittelt werden kann. Dies wirkt sich somit auch vorteilhaft auf die Genauigkeit des Optimierungsprozesses, also die Genauigkeit der Anpassung an den Benutzer aus.

Außerdem umfasst das Verfahren vorzugsweise ein Fertigen der optischen Flächen des optimierten Brillenglases. Insbesondere wird die zumindest eine optimierte Brillenglasfläche (Vorder- und/oder Rückfläche) insbesondere durch Schleifen in die im Optimierungsschritt ermittelte Form gebracht. Auch für diesen Schritt kann auf an sich bekannte Fertigungsverfahren zurückgegriffen werden, weshalb hierauf nicht näher eingegangen werden muss.

Vorzugsweise wird das so optimierte Brillenglas gemäß dem durch einen Tracer gemessenen oder aus dem Brillenfassungsbilddatensatz ermittelten Tracerdatensatz in die ausgewählte Fassung eingeschliffen, also gerandet. Das Verfahren umfasst also vorzugsweise ein Schleifen des Randes des Brillenglases gemäß dem durch einen Tracer gemessenen oder aus dem Brillenfassungsbilddatensatz ermittelten Tracerdatensatz. Damit betrifft die Erfindung in diesem Aspekt ein Verfahren zur Herstellung eines Brillenglases. Herkömmlich werden Brillengläser in der Regel als rohrunde Gläser, also mit kreisrundem Umfang, oder mit einer der endgültigen Fassungsform angenäherten Form gefertigt, d.h. die optischen Flächen werden optimiert und hergestellt bevor das Brillenglas die endgültige Randform für die Einpassung in die gewünschte Fassung erhält. In diesem Fall wird das "rohe", insbesondere rohrunde Brillenglas beispielsweise vom Brillenglashersteller zum Optiker übermittelt, der das Glas anschließend randet. Zumindest soweit das Randen automatisch erfolgt, wird zuvor die innere Randform der Fassung bzw. die Randform der Stützscheiben insbesondere mittels eines Tracers z.B. optisch oder mechanisch vermessen. Zusätzlich oder alternativ kann erfindungsgemäß der Tracerdatensatz auch direkt aus dem Brillenfassungsbilddatensatz ermittelt werden, was den Schritt der Vermessung mit einem Tracer einspart oder eine weitere Kontrollmöglichkeit bietet. Die gemessenen bzw. berechneten Werte dienen dann zum Einschleifen des Brillenglases in die Fassung, also zum Randen des Brillenglases.

In einer anderen bevorzugten Ausführungsform ist es nicht notwendig, dass das Brillenglas individuell optimiert und gefertigt wird. Vielmehr kann auf Basis der verbesserten Ermittlung der Gebrauchsstellung auf in genauer angepasster Weise auf vorgefertigte Brillengläser zurückgegriffen werden. In diesem Fall wird insbesondere auf Basis der individuell ermittelten Gebrauchsstellung ein geeignetes, nicht gerandetes Brillenglas für den Benutzer und die gewählte Fassung bereitgestellt, indem es beispielsweise aus einem vorgefertigten Satz von Brillengläsern entsprechend der ermittelten Gebrauchsstellung ausgewählt wird. Dieses Glas wird anschließend vorzugsweise analog zum individuell optimierten Brillenglas gemäß dem gemessenen oder berechneten Tracerdatensatz gerandet.

In einer weiteren bevorzugten Ausführungsform umfasst das Erfassen von Benutzerbilddaten:
- Erfassen eines ersten Benutzerbilddatensatzes, welcher zumindest einen Teilbereich des Kopfes des Benutzers zusammen mit der vom Benutzer getragenen, ausgewählten Brillenfassung in einer ersten Aufnahmerichtung darstellt; und
- Erfassen eines zweiten Benutzerbilddatensatzes, welcher zumindest einen Teilbereich des Kopfes des Benutzers zusammen mit der vom Benutzer getragenen, ausgewählten Brillenfassung in einer zweiten, von der ersten verschiedenen Aufnahmerichtung darstellt.

Besonders bevorzugt umfasst das Ermitteln von individuellen Parametern der Gebrauchsstellung:
- Ermitteln einer dreidimensionalen Position des zumindest einen ausgezeichneten Punktes des Auges anhand des ersten und zweiten Benutzerbilddatensatzes; und
- Ermitteln von dreidimensionalen Positionen der Konturpunkte des Randes des zu fertigenden Brillenglases anhand des ersten und zweiten Benutzerbilddatensatzes.

Es werden also vorzugsweise Benutzerbilddaten zumindest von Teilbereichen des Kopfes des Benutzers erfasst bzw. erzeugt, welche jeweils zumindest einen ausgezeichneten Punkt eines Auges des Benutzers umfassen. Insbesondere werden zumindest erste und zweite Benutzerbilddaten beispielsweise mittels einer ersten bzw. einer zweiten Benutzerbilderfassungseinrichtung aus verschiedenen Aufnahmerichtungen erfasst. Aus den zumindest zwei Benutzerbilddaten lässt sich eine dreidimensionale Position des zumindest einen ausgezeichneten Punktes bestimmen. In entsprechender Weise wird vorzugsweise für jeden Konturpunkt des Randes des zu fertigenden Brillenglases anhand der beiden Benutzerbilddatensätze die dreidimensionale Position ermittelt. Dabei können die zumindest zwei Benutzerbilddatensätze mittels zweier Benutzerbilderfassungseinrichtungen (z.B. Kameras) insbesondere gleichzeitig, oder aber auch mittels einer einzigen Benutzerbilderfassungseinrichtung bei unterschiedlicher Kopfhaltung bzw. Blickrichtung nacheinander erfasst werden.

Vorzugsweise umfassen somit die erfassten Benutzerbilddaten einen ersten Benutzerbilddatensatz, welcher zumindest einen Teilbereich des Kopfes in einer ersten Aufnahmerichtung darstellt, und einen zweiten Benutzerbilddatensatz, welcher einen Teilbereich des Kopfes in einer zweiten Aufnahmerichtung darstellt. In einer bevorzugten Ausführungsform erfolgt das Ermitteln von Konturpunkten des Randes des zu fertigenden Brillenglases für jeden Benutzerbilddatensatz, also für jede Aufnahmerichtung (Perspektive) separat. Nachdem aber für beide Benutzerbilddatensätze derselbe Brillenfassungsbilddatensatz (insbesondere als zu suchendes Muster bzw. Template) herangezogen wird, ist mit den separat ermittelten Konturpunkten in den einzelnen Benutzerbilddatensätzen über den jeweils korrespondierenden Datenpunkt des Brillenfassungsbilddatensatzes auch deren Zuordnung zueinander automatisch festgelegt, so dass direkt eine Bestimmung der dreidimensionalen Position erfolgen kann.

In einer anderen bevorzugten Ausführungsform ist die relative Position und Aufnahmerichtung der ersten und zweiten Benutzerbilderfassungseinrichtung bekannt und die ersten und zweiten Benutzerbilddatensätze werden vorzugsweise gleichzeitig erzeugt. Damit sind auch die beiden Transformationen des Brillenfassungsbilddatensatzes für die Suche in den beiden Benutzerbilddatensätzen relativ zueinander bekannt. Die in einem solchen Stereokamerasystem inhärent vorhandenen Informationen lassen sich also vorzugsweise dazu verwenden, um die Suche schneller und sicherer zu machen.

Während in einer Ausführungsform die dreidimensionale Position sämtlicher ermittelter Konturpunkte bestimmt werden kann, werden in einer anderen bevorzugten Ausführungsform Referenzpunkte für das Brillenglas, welche insbesondere von den Konturpunkten umfasst sind oder sich aus den Konturpunkten eindeutig ableiten lassen, (semi-) automatisch und/oder manuell ausgewählt und deren dreidimensionale Position bestimmt. Für das Ermitteln individueller Parameter ist es nämlich zumindest teilweise nicht erforderlich, die dreidimensionale Position des gesamten Randverlaufs explizit auszuwerten. Vielmehr ist die relative Position des Brillenglases zum entsprechenden Auge ebenso wie die relative Position der beiden Gläser zueinander bereits durch wenige Koordinaten (auf Basis der Referenzpunkte) eindeutig beschrieben.

So wird durch die Berücksichtigung einerseits des gesamten Randverlaufs aus dem Brillenfassungsbilddatensatz bei der Ermittlung der Konturpunkte die Genauigkeit der Zuverlässigkeit der Positionsbestimmung erhöht, während durch die anschließende Auswahl weniger Referenzpunkte, welche bereits eine eindeutige Bestimmung der (relativen) Position/Lage des Brillenglases bzw. der Brillengläser erlauben, der Rechenaufwand bei der Auswertung der individuellen Gebrauchsstellung gering gehalten wird.

In einer weiteren bevorzugten Ausführungsform legt der bereitgestellte Brillenfassungsbilddatensatzes den Verlauf der Ränder beider Brillengläser der ausgewählten Brillenfassung sowie deren relative Lage zueinander (insbesondere dreidimensional) fest, wobei das Verfahren ein Ermitteln der Ränder beider Brillengläser der ausgewählten Brillenfassung in den Benutzerbilddaten anhand des Brillenfassungsbilddatensatzes umfasst. In diesem Fall wird vorzugsweise auch noch die relative Position und/oder Orientierung der beiden zu fertigenden Gläser der gewünschten Brillenfassung zueinander festgelegt. Dies ist besonders dann vorteilhaft, wenn die gewünschte Brille einen großen Fassungsscheibenwinkel aufweist. Aber auch bei einem kleinen Fassungsscheibenwinkel wird durch ein Anpassen bzw. eine Mustersuche auf Basis der Kombination beider Brillengläser die Präzision in der Lage der ermittelten Konturpunkte weiter erhöht.

Vorzugsweise umfasst das Verfahren außerdem ein Anzeigen der Benutzerbilddaten zusammen mit den ermittelten Konturpunkten beispielsweise über einen Bildschirm ähnlich einem aus herkömmlichen Videozentriersystemen bekannten Bildschirm. Damit kann einerseits ein Anwender die ermittelten Konturpunkte kontrollieren. Andererseits ist damit auch eine Fassungsberatung für den Brillenträger möglich.

In einem anderen Aspekt betrifft die vorliegende Erfindung eine Vorrichtung zum Ermitteln von Benutzerdaten für die Herstellung eines individuellen Brillenglases zu einer ausgewählten Brillenfassung für einen Benutzer. Die Vorrichtung umfasst einen Datenspeicher mit einem Brillenfassungsbilddatensatz. Außerdem umfasst die Vorrichtung eine Benutzerbilderfassungseinrichtung zum Erfassen von Benutzerbilddaten zumindest eines Teilbereichs des Kopfes des Benutzers zusammen mit der vom Benutzer getragenen, ausgewählten Brillenfassung. Schließlich umfasst die erfindungsgemäße Vorrichtung eine Auswerteeinrichtung zum Ermitteln von Konturpunkten des Randes des zu fertigenden Brillenglases in den Benutzerbilddaten anhand des Brillenfassungsbilddatensatzes. Für die erfindungsgemäße Vorrichtung sind die obigen ebenso wie die nachfolgenden Ausführungen zum erfindungsgemäßen Verfahren in analoger Weise zu verstehen.

Vorzugsweise umfasst die Vorrichtung außerdem eine Brillenfassungsbilderfassungseinrichtung zum Erfassen des Brillenfassungsbilddatensatzes der ausgewählten Brillenfassung. Die Brillenfassungsbilderfassungseinrichtung umfasst vorzugsweise eine Bildhintergrundfläche, vor welcher die ausgewählte Brillenfassung angeordnet werden kann. Die Bildhintergrundfläche hebt sich vorteilhafterweise farblich von der aufzunehmenden Brillenfassung ab, so dass kontrastreiche und damit detailreiche Bilddaten aufgenommen werden können. Vorzugsweise ist die Bildhintergrundfläche austauschbar bzw. veränderbar, um den Hintergrund an die ausgewählte Brillenfassung optimal anzupassen. Handelt es sich z.B. um eine Brillenfassung mit dunklem (z.B. schwarzem Rand), so kann vorteilhafterweise eine helle (z.B. weiße) Bildhintergrundfläche gewählt werden. Durch einen derartigen künstlichen Hintergrund können im Vergleich zu einem realitätsgetreuen Hintergrund, wie er bevorzugt bei der Benutzerbilddatenerfassung verwendet wird, kontrast- und detailreichere Bilder aufgenommen werden. Zudem kann die Bildhintergrundfläche verschiedene Muster und/oder Markierungen aufweisen, welche ein vereinfachtes und präziseres automatisches Auffinden der Brillenfassung mittels Bildverarbeitungsalgorithmen ermöglichen und/oder als Maßstab für die Bestimmung der Größe bzw. von Abmessungen der Brillenfassung (oder von Teilen der Brillenfassung) dienen. Bei bekannter Größe bzw. bei bekannten Abmessungen kann auch die Brillenfassung als Maßstab dienen, so dass eine Videozentrierung zumindest teilweise durchgeführt werden kann, ohne ein kalibriertes 3D Stereosystem oder einen Fassungsaufsatz zu verwenden.

Ferner umfasst die Brillenfassungsbilderfassungseinrichtung vorzugsweise Befestigungsmittel bzw. eine Halterung, um die ausgewählte Brillenfassung vor der Bildhintergrundfläche zu fixieren. Die Brillenfassungsbilderfassungseinrichtung umfasst vorzugsweise zumindest eine Kamera sowie Beleuchtungsmittel. Die Kamera kann eine beliebige Digitalkamera sein. Die Beleuchtungsmittel können bevorzugt Licht in unterschiedlichen Wellenlängenbereichen aussenden, insbesondere Licht, welches von Musterstützscheiben und/oder Mustergläsern der Brillenfassung erkennbar absorbiert wird. Gemäß einer bevorzugten Ausführungsform befinden sich die Bildhintergrundfläche und die Befestigungsmittel bzw. Halterungen für die Brillenfassung in einer Box. Die Beleuchtungsmittel und/oder die Kameras können sich innerhalb oder außerhalb der Box befinden.

Vorzugsweise umfasst die Vorrichtung außerdem eine Bildanzeigeeinrichtung zum Ausgeben der Benutzerbilddaten zusammen mit den ermittelten Konturpunkten an den Benutzer. Damit kann einerseits ein Anwender die ermittelten Konturpunkte kontrollieren. Andererseits ist damit auch eine Fassungsberatung für den Brillenträger möglich.

Neben entsprechenden Verfahren zum Ermitteln von Benutzerdaten für die Herstellung eines Brillenglases zu einer ausgewählten Brillenfassung für einen Benutzer, insbesondere unter Einbeziehung einer oder mehrerer der als funktionale Abläufe in den erfindungsgemäßen Vorrichtungen implementierten entsprechenden Verfahrensschritten bietet die Erfindung auch ein Computerprogrammprodukt, insbesondere in Form eines Speichermediums oder einer Signalfolge, umfassend computerlesbare Anweisungen, welche, wenn geladen in einen Speicher eines Computers und ausgeführt von dem Computer, bewirken, dass der Computer ein Verfahren gemäß der vorliegenden Erfindung, insbesondere in einer bevorzugten Ausführungsform durchführt.

Die Erfindung wird nachfolgend anhand bevorzugter Ausführungsformen mit Bezug auf die begleitenden Zeichnungen beispielhaft beschrieben. Dabei zeigt:
- Fig. 1:: eine schematische Darstellung eines Verfahrens gemäß einer ersten bevorzugten Ausführungsform;
- Fig. 2:: eine schematische Darstellung eines Verfahrens gemäß einer zweiten bevorzugten Ausführungsform;
- Fig. 3:: eine schematische Darstellung eines Verfahrens gemäß einer dritten bevorzugten Ausführungsform;
- Fig. 4:: eine schematische Darstellung einer bevorzugten Ausführungsform einer Brillenfassungsbilddatenerfassungseinrichtung mit vertikal angeordneter und befestigter Brillenfassung;
- Fig. 5:: eine schematische Darstellung einer bevorzugten Ausführungsform einer Brillenfassungsbilddatenerfassungseinrichtung mit horizontal angeordneter Brillenfassung;
- Fig. 6:: eine schematische Darstellung eines aufgenommenen Brillenfassungsbilddatensatzes zur Ermittlung des Fassungsscheibenwinkels einer Brille;
- Fig. 7:: eine photographische Aufnahme als visuelle Darstellung eines Brillenfassungsbilddatensatzes;
- Fig. 8:: eine weitere photographische Aufnahme als visuelle Darstellung eines Brillenfassungsbilddatensatzes mit eingeblendeten Linien zur Ermittlung des Fassungsscheibenwinkels;
- Fig. 9:: eine photographische Aufnahme als visuelle Darstellung eines Benutzerbilddatensatzes.

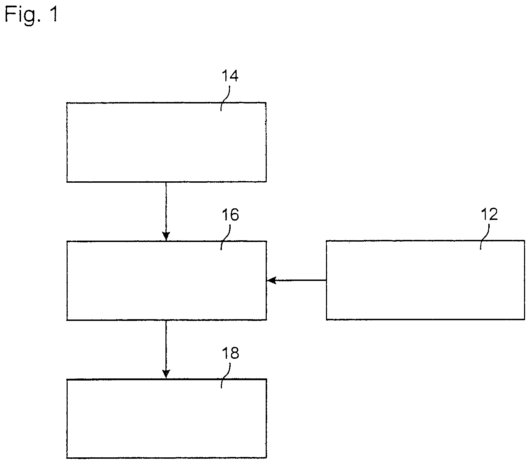

Gemäß der in **Fig. 1** veranschaulichten bevorzugten Ausführungsform umfasst ein Verfahren ein Bereitstellen eines Brillenfassungsbilddatensatzes (12). In dem Brillenfassungsbilddatensatz wird nach der Fassung anhand einer oder mehrerer Eigenschaften, in denen sich Fassung und Hintergrund voneinander unterscheiden, gesucht. Dabei können verschiedene Bildverarbeitungsmethoden zum Einsatz kommen.

Die Suche kann z.B. einen globalen Schwellwert der Eigenschaft zur Unterscheidung heranziehen. Aufwendigere Methoden wie die Suche von Kanten, die Verwendung eines lokalen Schwellwertes, Unterscheidung Anhand von Gebieten in Farbräumen, etc. können ebenfalls zum Einsatz kommen.

Die Suche nach ausgezeichneten Punkten auf der Fassung wird anhand einer geeigneten Zielfunktion durchgeführt. Anhand der verwendeten Eigenschaft kann mit der Zielfunktion eine Bewertung der Bildpunkte vorgenommen werden.

Ausgezeichnete Punkte auf der Fassung sind eindeutige Punkte auf der Fassung, die weitgehend unabhängig von der Blickrichtung auf die Fassung in der Projektion der Bilddaten den gleichen Punkt auf der Fassung bezeichnen. Als ausgezeichnete Punkte kann z.B. der innere Fassungsrand verwendet werden. Die Generierung einer vollständigen Fassungskontur kann entweder von einzelnen durch die Suche extrahierten Punkten ausgehend zusammengesetzt werden, oder von einer geschlossenen Startform ausgehend diese Form anpassen bis die Form der Gesuchten entspricht (z.B. Snake-Algorithmus). Letzteres vermeidet Probleme bei der Suche in Bereichen mit schlechtem Kontrast. Insbesondere in Bereichen schwacher Krümmung können Bereiche, in denen keine Kontur der Fassung gefunden werden konnte, überbrückt werden, indem die jeweils letzten Randpunkte miteinander verbunden werden. Idealerweise kommt dabei eine parametrisierte Funktion zum Einsatz, die z.B. die Krümmung der noch gefundenen Kontur fortsetzt und einen stetigen Anschluss bildet. Neben dem inneren Fassungsrand können auch andere Punkte auf der Fassung verwendet werden. Bei Bohrbrillen können dies z.B. die Bohrlöcher sein. Zur späteren Referenzierung in der Aufnahme des Videozentriersystems sind mindestens zwei ausgezeichnete Punkte auszuwählen.

Beispielsweise kann unter Anwendung von bekannten Bildverarbeitungsalgorithmen die Form des Verlaufs des Randes zumindest eines herzustellenden Brillenglases für eine ausgewählte Brillenfassung (32) ermittelt werden. Der Verlauf des Randes des Brillenglases entspricht dabei im Wesentlichen dem inneren Fassungsrand der ausgewählten Brillenfassung (32). Bei randlosen Fassungen wird unter dem inneren Fassungsrand der Rand der Stützscheiben bzw. der später zu integrierenden Gläser verstanden. Für Bohr- und Nylorbrillen gilt dies sinngemäß. Besonders sinnvoll ist es, bei der Fassungsranderkennung für die Videozentrierung die Kante einer Fassung bzw. einer Stützscheibe zu wählen, auf die die Zentrierdaten für die späteren Prozessschritte bis hin zum Einschleifen referenziert werden.

Der Brillenfassungsbilddatensatz kann beispielsweise vom Optiker individuell für eine ausgewählte Brillenfassung (32), also insbesondere nach der Auswahl der Brillenfassung (32) durch den Benutzer (50), durch Fotografieren der ausgewählten Brillenfassung (32) erzeugt werden. Derartige Daten bieten den Vorteil, dass sie aufgrund der individuellen Ermittlung die tatsächliche Form des konkreten ausgewählten Exemplars der Fassung wiedergeben und somit mögliche, wenn auch geringfügige, Abweichungen zu anderen Exemplaren desselben Modells berücksichtigen.

Der Brillenfassungsbilddatensatz kann jedoch auch bereits vom Hersteller des jeweiligen Brillenfassungsmodells erzeugt und dem Optiker zur Verfügung gestellt werden. Der Brillenfassungsbilddatensatz wird somit für das ausgewählte Fassungsmodell unabhängig von dem konkreten zu detektierenden Exemplar bereitgestellt. Vorteil dieser Variante ist der geringere Aufwand für den Optiker während des Beratungs-, Vermessungs- und Bestellprozesses. Die Daten können dabei zentral an einem Exemplar der Fassung erfasst oder lokal durch den Optiker einmal an einem Exemplar ermittelt werden.

Außerdem umfasst das Verfahren gemäß der in **Fig. 1** dargestellten Ausführungsform ein Erfassen von Benutzerbilddaten (14) zumindest eines Teilbereichs des Kopfes des Benutzers (50), insbesondere einer Augenpartie, zusammen mit der vom Benutzer (50) getragenen, ausgewählten Brillenfassung (32). Dieser Vorgang kann analog zur Bilderfassung in bekannten Videozentriersystemen erfolgen. Dabei wird der Benutzer (50) aufgefordert, die ausgewählte Brillenfassung (32) in der gewünschten Gebrauchsstellung zu tragen und damit beispielsweise eine bestimmte Sehaufgabe zu erfüllen. Das heißt, er wird gebeten sich insbesondere in eine bestimmte Position vor eine Kamera (40) zu begeben und gegebenenfalls in eine bestimmte Richtung zu blicken. Mittels der zumindest einen Kamera (40) werden dann die Benutzerbilddaten erzeugt. Diese stellen zumindest eine für die Anpassung des Brillenglases bzw. der Brillengläser relevante Gesichtspartie (insbesondere eine Augenpartie) zusammen mit der getragenen Brillenfassung (32) dar. Vorzugsweise stellen die Benutzerbilddaten im Wesentlichen das gesamte Gesicht dar und werden auch für eine Fassungs- und Gläserberatung herangezogen, wie sie bei bekannten Videozentriersystemen ebenfalls bereits durchgeführt wird. Der Schritt (14) umfasst ferner ein Aufsuchen der Pupillen des Benutzers in den Benutzerbilddaten und Ermitteln eines Pupillendatensatzes. Über die gefundene Position der Pupillen und der Annahme eines Standardabstandes der Pupillen von beispielsweise 64 mm, ergibt sich ein Vorskalierungsfaktor. Mit Hilfe eines Vorskalierungsfaktors und der Kenntnis der realen Größen eines Shape-Modells der Brillenfassung (32), d.h. aus der Kenntnis der realen Größen der Konturen der Brillenfassung (32), kann die Größe des Shape-Modells, beispielsweise in Pixeln, in den Benutzerbilddaten angenommen werden. Der Vorskalierungsfaktor kann als Startparameter für die Suche der optimalen Lage des Shape-Modells verwendet werden. Da der Startparameter dann nur noch in einem kleinem Bereich um den Vorskalierungsfaktor variiert bzw. angepasst werden muss, kann somit der Suchvorgang beschleunigt werden.

Neben dem Skalierungsfaktor des Shapemodells können durch Bildverarbeitungsalgorithmen auch die Ortspositionen in x- und y-Bildkoordinaten sowie die Winkellage der Brillenfassung (32) um eine horizontale und vertikale Achse durch die Brillenfassung (32) bestimmt werden. Auch für diese Parameter können zunächst Annahmen aufgrund der Pupillenposition gemacht werden. Beispielsweise können dazu die in dem Brillenfassungsbilddatensatz enthaltenen Scheiben, insbesondere deren Abmessungen bzw. Größen, verwendet werden. So kann für die Suche der Brillenfassung (32) angenommen werden, dass die Pupillen in der Mitte der Scheiben liegen. Die Ortsposition kann schließlich derart variiert werden, dass die Pupillen immer innerhalb der Scheiben liegen. Des Weiteren kann anhand der Lage der Pupillen im Benutzerbild auch eine Winkeleinschränkung um die vertikale Achse bei der Suche der optimalen Lage des Shape-Modells angenommen werden. Dazu muss allerdings in dem Brillenfassungsbilddatensatz die Ausrichtung der Brillenfassung (32) enthalten sein. Man kann z.B. annehmen, dass die Pupillen ungefähr dieselbe horizontale Ausrichtung wie die Brillenfassung (32) haben. Wenn z.B. festgestellt wird, dass die Pupillen im Benutzerbilddatensatz um einen bestimmten Winkel gegenüber der Horizontalen versetzt bzw. verkippt sind, kann dieser Winkel auch als Startwinkel für das Shape-Modell der Brillenfassung (32) verwendet werden. Insbesondere kann der Winkel für das Shape-Modell auf einen engen Wertebereich eingeschränkt werden, da die Abweichung des tatsächlichen bzw. realen Winkels relativ zum Startwinkel deutlich unter +/-90° liegen wird. Durch die oben beschriebene Vorgehensweise kann das Auffinden der Brillenfassung (32) im Benutzerbild deutlich vereinfacht und/oder beschleunigt werden.

In einem nächsten Schritt (16) sucht das Verfahren nun in den Benutzerbilddaten nach Bildelementen der Brillenfassung (32), die solchen im Brillenfassungsbilddatensatz entsprechen. Beispielsweise kann nach dem Rand der Brillenfassung (32) oder dem Rand von Stützscheiben bzw. Gläser gesucht werden. Alternativ oder zusätzlich kann nach dem Steg (33) der Brillenfassung (32) gesucht werden. Die Suche kann entweder per Bildverarbeitung in Bilddaten erfolgen oder - abstrakter - in einem Datensatz, in dem die relevanten Daten extrahiert und aufbereitet vorliegen. Hilfreiche Beschreibungen einiger im Folgenden erwähnten Suchalgorithmen, der Grundlagen des Pattern- (bzw. Template-) matchings sowie der Definition geeigneter Zielfunktionen finden sich beispielsweise in Lehrbüchern der Künstlichen Intelligenz wie S. Russel und P. Norvig: "Artificial Intelligence: A Modern Approach", Prentice Hall, 3. Auflage (2009) und der Bildverarbeitung wie C. Steger et al.: "Machine Vision Algorithms and Applications", Wiley-VCG (2008).

Im einfachsten Fall wird der Brillenfassungsbilddatensatz in den Bilddaten nach den Prinzipien des Pattern- (bzw. Template-) matchings gesucht. Dazu können während der Suche sowohl die zu suchenden Daten (als auch in speziellen Fällen die Bilddaten) Transformationen unterzogen werden. Aufgrund der Abbildung des dreidimensionalen Raums in die Bilddatenebene werden dazu vorteilhafterweise affine Transformationen wie Translation, Rotation, Skalierung, Reflexion und Scherung sowie Parallelprojektionen und (nichtaffine) projektive Translationen wie die Zentralprojektion in der aus der Literatur bekannten Weise eingesetzt. Die Parameter dieser Transformationen werden systematisch variiert und das derart transformierte Pattern (bzw. Template) wiederholt über den Suchraum gelegt. Damit wird die Übereinstimmung zwischen Pattern (bzw. Template) und Ausschnitt aus dem Suchraum gemäß einer Zielfunktion berechnet.

Als erfolgreiches Ergebnis der Suche gilt dabei die Position (d.h. der Parametersatz für die affine bzw. projektive Transformation) mit dem höchsten Wert, wenn dieser oberhalb einer gegeben Schwelle liegt. Naturgemäß können die aus dem Bereich der künstlichen Intelligenz bekannten Verfahren eingesetzt werden. Beispiele hierfür wären heuristische Algorithmen, optimierende Verfahren, genetische Algorithmen und die simulierte Abkühlung (simulated annealing).

Beispielsweise kann aus dem Brillenfassungsbilddatensatz ein Template der Brillenfassung erstellt werden. Dieses Template kann dann im Benutzerbild bzw. in den Benutzerbilddaten mit Hilfe eines Suchalgorithmus gesucht werden.

Als Suchalgorithmus kann z.B. ein konturbasiertes Verfahren verwendet werden. Hierzu enthält das Template Konturen, welche dann im Benutzerbildild bzw. in den Benutzerbilddaten gesucht werden. Dieses konturbasierte Verfahren sucht nach Kanten und Übergängen im Template bzw. im Bild. Es gibt dabei verschiedene Ansätze, um Kanten zu detektieren. Insbesondere sind konturbasierte Verfahren besonders geeignet, Suchen mit unterschiedlichen Rotationen und/oder unterschiedlichen Beleuchtungen zwischen Template und Bild durchzuführen Bei reinen pattern-matching-Verfahren können insbesondere unterschiedliche Beleuchtungen problematisch sein Dadurch ist bei der Suche der Brillenfassung im Benutzerbild ein konturbasiertes Verfahren vorteilhaft. Vorteilhafterweise kann bei dem konturbasierten Suchverfahren auch eine Skalierung bzw. ein Skalierungsfaktor verwendet werden. Da ein solcher Skalierungsfaktor gemäß einer bevorzugten Ausführungsform des erfindungsgemäßen Verfahrens auf einen bestimmten, insbesondere kleinen, Wertebereich, eingeschränkt und somit der Suchbereich verringert werden kann, kann der Suchvorgang deutlich beschleunigt werden.

Ganz allgemein kann somit das erfindungsgemäße Verfahren einen Suchalgoithmus, bei dem Skalierungen und/oder Rotationen berücksichtigt werden können, deutlich beschleunigen, indem die möglichen Wertebereiche der Skalierung und/oder der Rotation eingeschränkt werden. Insbesondere kann durch den Schritt des Suchens der Pupillen ein Skalierungsfaktor ermittelt und dessen Wertebereich eingeschränkt werden, was zu einem schnelleren Auffinden der Brillenfassung in den Benutzerbilddaten führt. Auch das Einschränken des Rotationswinkelbereichs aufgrund der vorher gefundenen Pupillen führt zu einem schnelleren Ergebnis.

Um den Suchvorgang schneller bzw. stabiler zu gestalten, können die Bilddaten vor der Suche aufbereitet werden. Darunter fallen die typischen Operationen der Bildverarbeitung wie die Anpassung von Kontrast und Helligkeit, Farbraumtransformationen, die Verwendung angepasster Farbräume, die Einschränkung auf einzelne Farbkanäle und ähnliches. Aber auch komplexere Operationen wie das Schärfen, die Anwendung von Filtern und die Extraktion von Kanten gehören zu dieser Kategorie, solange es sich bei den Ergebnissen wiederum um Bilddaten im weitesten Sinn handelt.

Um Rechenzeit zu sparen, kann die Suche auch nacheinander in unterschiedlich aufbereiteten Suchräumen stattfinden. So kann in einem ersten gröber gerasterten Suchraum die ungefähre Position des Fassungsrandes (d.h. Parameter der oben genannten Transformation) ermittelt werden. In dessen Umgebung kann dann in einem feiner aufgelösten Suchraum die exakte Position bestimmt werden.

Unter abgeleiteten Daten bzw. Bilddaten wird ein Datensatz verstanden, in dem die relevanten Daten extrahiert und aufbereitet vorliegen. Ein Beispiel hierfür ist die Angabe von Kanten. Diese werden dabei per Bildverarbeitung extrahiert und dann durch die Angabe ihrer Koordinaten abgespeichert. Dies führt im einfachsten Fall zur Modellierung der Kante durch eine Punktwolke und die Angabe der einzelnen Koordinaten.

Bevorzugt wird eine analytische Angabe, bei der aus der Punktwolke einzelne Elemente (z.B. gerade Strecken, Radien oder Splines) extrahiert und in abstrakterer Beschreibung (z.B. Anfangspunkte, Stützpunkte, Längen, Radien, Richtungen, Tangenten, Tangentialebenen, einschließende Ebenen, Normalen, Koeffizienten von Funktionszusammenhängen) abgespeichert werden.

Im einfachsten Fall verläuft die Suche auf Basis von abgeleiteten Daten analog zu einem der oben beschriebenen Suchverfahren (z.B. Pattern- (bzw. Template-) matching) für die direkten Bilddaten. Die optimale Position abgeleiteter Daten des Brillenfassungsbilddatensatzes in den abgeleiteten Daten der Benutzerbilddaten (d.h. der Parametersatz für die Transformationen) wird durch entsprechende Suchstrategien zur Optimierung der Zielfunktion bei Variation der Parameter der Transformationen bestimmt. Selbstverständlich sind auch weitere Metriken und Berechnungsmethoden verwendbar.

Die Verwendung analytischer Daten hat dabei den prinzipiellen Vorteil, dass während der Suche einzelne oder ein ganzer Satz Parameter auch analytisch bestimmt werden kann, ohne dass eine Suche mit Variation von Parametern und Maximierung der Zielfunktion notwendig ist. Wird z.B. während eines Schritts der Suche ein übereinstimmender Punkt eines Elements gefunden, kann die Lage des Elements (d.h. die Parameter der entsprechenden Transformationen) aus der analytischen Beschreibung des Elements direkt berechnet werden. Ein Beispiel hierfür wäre die Berechnung von Rotationsachsen und Winkeln bei der gefundenen Zuordnung eines Endpunktes.

Vorzugsweise wird auch der Umgang mit fehlenden Elementen bei der Bestimmung der Zielfunktion berücksichtigt. Durch eine geeignete Bewertung dieser Abschnitte können zweierlei Fehler verhindert werden: Der erste Fehler besteht darin, dass der Algorithmus (offensichtlich falsche) Positionen für die Brillenfassungsbilddaten bevorzugt, bei denen ein Punkt übereinstimmt, in dessen Nähe aber keine anderen Elemente vorhanden sind. Der gegenteilige Fehler tritt auf, wenn falsche Elemente in der Umgebung der Lücke richtiger Elemente die Position der Brillenfassungsbilddaten in ihre Richtung "ziehen", um so die Lücke unter Vergrößerung des Abstandes von den anderen Elementen aufzufüllen. Diese Gefahr besteht insbesondere, wenn die Bilddaten auf Grund der Ausprägung der Nut viele nahe beieinander liegende Kanten aufweisen. Im einfachsten Fall wird ein fester Wert für den Abstand definiert. Dieser kann beispielsweise der maximalen Entfernung bei der Auswahl der Elemente entsprechen.

Weniger empfindlich auf kleinere Ausfälle ist ein Verfahren, bei dem die Bewertung mit der Länge des fehlenden Stücks überproportional zunimmt. Im Ergebnis können fehlende Stücke in den abgeleiteten Daten der Benutzerbilddaten dann leicht durch abgeleitete Daten der Brillenfassungsbilddaten überbrückt werden, da diese in der Regel vollständig vorliegen.

Bei Stereokamerasystemen besteht prinzipiell die Möglichkeit, beide Kameras unabhängig voneinander zu betrachten und den Fassungsrand in den Bild- bzw. abgeleiteten Daten jeder Kamera unabhängig voneinander individuell zu suchen. Die in einem Stereokamerasystem inhärent vorhandenen Informationen lassen sich darüber hinaus vorzugsweise dazu verwenden, um die Suche schneller und sicherer zu machen.

Da die Abbildungseigenschaften der einzelnen Kameras sowie ihre Anordnung zueinander (d.h. intrinsische und extrinsische Parameter) bekannt sind, kann aus der Position des Musters im dreidimensionalen Raum die affine bzw. projektive Abbildung in den Bilddatensatz beider Kameras berechnet werden. Entsprechend ist es vorteilhaft, für die Suche, nicht die Parameter der abbildenden Funktionen zu Grunde zu legen, sondern das Muster durch den Raum (jeweils drei translatorische und rotatorische Koordinaten sowie gegebenenfalls ein Parameter zur Anpassung der absoluten Größe) zu verschieben und die aus den jeweiligen Positionen resultierenden Abbildungen des Musters mit den jeweiligen Bilddatensätzen der jeweiligen Kamera zu vergleichen.

Dazu kann auch eine gemeinsame Zielfunktion definiert werden, die die Übereinstimmung des Musters mit beiden Bildern wiedergibt. Um der Tatsache Rechnung zu tragen, dass die Qualität der Bilder unterschiedlich sein kann (auch abhängig vom Ort bzw. der Perspektive) können Gewichtungsfaktoren verwendet werden.

Bei der Suche in abgeleiteten Daten kann - wie bereits oben beschrieben - für jede Kamera ein Datensatz abgeleitet werden. Das Modell kann dann in diesem ebenfalls gemäß dem oben beschriebenen Vorgehen gesucht werden, allerdings diesmal kombiniert mit dem beschriebenen Verfahren zur Verwendung der bekannten Kameraparameter (soweit vorhanden) und dreidimensionalen Daten.

Vorteilhafter ist es auch, aus den Daten der einzelnen Kameras einen dreidimensionalen Datensatz zu generieren, in dem die einzelnen Elemente (z.B. Punkte, Strecken, Radien, Splines) aus beiden Kameras einander zugeordnet und zu dreidimensionalen Objekten im dreidimensionalen Raum verknüpft werden. Dabei kann das oben beschriebene Verfahren (z.B. Berechnung von Rotationsachsen und Winkeln sowie Translationsvektoren) direkt vom zweidimensionalen auf den dreidimensionalen Raum übertragen werden. Geeignete Parameter sind auch wieder die jeweils drei translatorischen und rotatorischen Parameter sowie - falls erforderlich - ein Parameter zur Anpassung der absoluten Größe. Projektionen sind in diesem Fall nicht mehr notwendig.

Zur Minimierung des Suchaufwands und damit der Rechenzeit kann eine Einschränkung der Bilddaten, der abgeleiteten Daten sowie des Suchraums vorgenommen werden. Im Fall der direkten Suche in den Bilddaten wird durch eine Einschränkung der Bilddaten auf bestimmte Bereiche des Suchraums direkt verkleinert. Im Fall der Suche in den abgeleiteten Daten kann so die Menge der abzuleitenden sowie der abgeleiteten Daten ebenfalls verringert werden. Eine geeignete Einschränkung stellt beispielsweise der Bereich des Gesichts oder einer entsprechend erweiterten Augenpartie dar.

Bei der Suche in aufbereiteten Bilddaten oder abgeleiteten Daten wird durch eine Einschränkung der ursprünglichen Bilddaten zusätzlich die Aufbereitung bzw. die Ableitung beschleunigt, da bereits diese dann nur noch auf einem verringerten Datensatz angewandt werden muss. Unabhängig davon kann eine entsprechende Einschränkung weiterhin auch in den aufbereiteten Bilddaten vorgenommen werden. Dies gilt besonders, wenn diese für die Erkennung der relevanten Bereiche geeigneter sind. Auch im Fall der Verwendung von abgeleiteten Daten lässt sich dadurch der Aufwand für die beschriebene Ableitung reduzieren.

Diese Einschränkung kann manuell (z.B. durch das Aufziehen einer entsprechenden Form wie eines Rechtecks) in dargestellten Bilddaten erfolgen. Es kann aber auch ein Bereich per Bildverarbeitung automatisch oder semiautomatisch ausgewählt werden. Kriterien für eine automatische Selektion können dabei Merkmale des Gesichts (z.B. der Bereich um die Nase, der Bereich um die Augen bzw. die Pupillen, der Bereich auf Höhe der Ohren, ...) oder für die Fassung charakteristische Merkmale (z.B. Farben, Formen, Liniendichte, ...) sein.

Bei der Verwendung von abgeleiteten Daten kann der Suchraum ferner dadurch eingeschränkt werden, dass z.B. Kantenelemente, die bestimmte Bedingungen (z.B. minimaler oder maximaler Krümmungsradius, Größe und Geschlossenheit im Fall einer vollständigen Kontur), die die zu suchenden Daten aufweisen, nicht erfüllen, bereits vor der eigentlichen Suche verworfen werden.

Sowohl bei der Suche in Bilddaten als auch bei Suche in abgeleiteten Daten kann der Parameterraum eingeschränkt werden. Dies kann beispielsweise durch die Angabe von Angelpunkten geschehen. Dabei werden ein oder mehrere Punkte aus den zu den Brillenfassungsbilddaten korrespondierenden Punkten aus den Benutzerbilddaten zugeordnet. Damit entfallen die Freiheitsgrade der Translation. Im Fall mehrerer Punkte für ein Element reduzieren sich darüber hinaus die Freiheitsgrade der Rotation. Auch eine ungefähre Zuordnung (z.B. durch die Angabe eines Bereiches ist möglich). Dadurch entfallen zwar keine vollständigen Freiheitsgrade, jedoch wird der Suchraum in den entsprechenden Richtungen stark eingeschränkt.

Ebenfalls ist die Zuordnung (fix oder ungefähr) in einer Dimension (oder bei dreidimensionalen Daten auch in zwei Dimensionen) möglich. Dies ist zum Beispiel dann sinnvoll, wenn Angelpunkte einzelnen Bildpunkten der Aufnahmen, bei denen es sich naturgemäß um Projektionen handelt, zugeordnet werden können. Diese Zuordnung kann manuell, automatisch (z.B. in einem vorgelagerten Schritt der Bildverarbeitung) oder semi-automatisch erfolgen.

Analog zur Zuordnung von Punkten können auch Richtungen von Elementen vorgegeben werden. Dafür gilt das oben Beschriebene sinngemäß. Vorteilhaft ist auch die Verbindung der Angabe von einem oder mehreren Punkten mit der Angabe von einer oder mehreren Richtungen.

Das Ergebnis kann dem Benutzer (50) in den Bilddaten angezeigt werden. Diese können zur besseren visuellen Erkennung der relevanten Kanten auch bereits im oben beschriebenen Sinne aufbereitet sein. Die Anzeige kann dabei aus einer Darstellung der gesamten Kontur des Modells oder einzelner (erkannter) Elemente daraus in der richtigen Position bestehen.

Dem Benutzer (50) können weiterhin mehrere mögliche Positionen angezeigt werden. Diese können simultan oder sequentiell angezeigt werden, wobei der Anwender zwischen den verschiedenen Positionen wechseln kann. Dabei kann es sich entweder um eine vorgegebene Anzahl von Positionen mit den höchsten Werten für die Zielfunktion oder um alle Positionen handeln, bei denen die Zielfunktion einen gewissen Mindestwert erreicht. Geometrisch nahe beieinander liegende Positionen können dabei zusammengefasst werden. Der Anwender erhält nun die Möglichkeit eine dieser Positionen auszuwählen.

Dem Anwender kann ferner die Möglichkeit gegeben werden, die Position anzupassen, in dem er leichte Verschiebungen durchführt. Bei der Verwendung mehrerer Kameras und dem Vorliegen dreidimensionaler Informationen kann dieser dabei die Position im Raum manipulieren und das Resultat kann in den Benutzerbilddaten aller Kameras dargestellt werden. Weiterhin kann dem Benutzer (50) die Möglichkeit eingeräumt werden, die Kontur geringfügig zu verändern, um sie der tatsächlichen Fassung anzupassen. Dies ist insbesondere dann von Vorteil, wenn die Brillenfassungsbilddaten nicht für das konkrete ausgewählte Modell individuell erzeugt wurden und gegebenenfalls Abweichungen der Form des konkreten ausgewählten Modells von der Form des für die Generierung der Brillenfassungsbilddaten verwendeten Modells auftreten. Bei randlosen oder Nylorbrillen kann dabei auch die Form des Glases für Fertigung und Formrandung manipuliert werden.

Auf Basis der auf diese Weise ermittelten Konturpunkte wird vorzugsweise in einem weiteren Schritt (18) die individuelle Gebrauchsstellung des Brillenglases bzw. der Brillenfassung (32) für den Benutzer (50) ermittelt.

Das Ergebnis kann dem Benutzer (50) in den Benutzerbilddaten angezeigt werden. Diese können zur besseren visuellen Erkennung auch bereits aufbereitet sein. Die Anzeige kann dabei zum Beispiel aus einer Darstellung der Kontur des Modells in der richtigen Position bestehen. Dem Benutzer (50) können weiterhin mehrere mögliche Positionen angezeigt werden. Diese können simultan oder sequentiell angezeigt werden, wobei der Anwender zwischen den verschiedenen Positionen wechseln kann. Dabei kann es sich entweder um eine vorgegebene Anzahl von Positionen mit den höchsten Werten für die Zielfunktion oder um alle Positionen handeln, bei denen die Zielfunktion einen gewissen Mindestwert erreicht. Geometrisch nahe beieinanderliegende Positionen können dabei zusammengefasst werden. Der Anwender kann nun die Möglichkeit erhalten eine dieser Positionen auszuwählen. Dem Anwender kann ferner die Möglichkeit gegeben werden, die Position anzupassen, in dem er leichte Verschiebungen durchführt. Bei der Verwendung mehrerer Kameras und dem Vorliegen dreidimensionaler Informationen kann dieser dabei die Position im Raum manipulieren und das Resultat in den Bilddaten aller Kameras dargestellt werden. Weiterhin kann dem Benutzer (50) die Möglichkeit eingeräumt werden, die Kontur geringfügig zu verändern, um sie der tatsächlichen Fassung anzupassen.

Bei der Verwendung des inneren Fassungsrands (Fassungskontur) als ausgezeichnete Punkte sind die in dieser Art aufbereiteten Daten für die Videozentrierung äquivalent zu individuellen Tracerdaten verwendbar um die entsprechende Form in den Aufnahmen des Videozentriersystems zu suchen. Da die aufbereiteten Daten die absoluten Abmessungen von wenigstens zwei ausgezeichneten Fassungspunkten enthalten, ist damit auch eine Videozentrierung mit nur einer Kamera (40) ohne Aufsatz auf der Fassung möglich. Als Maßstab wird bei der Videozentrierung dabei der ermittelte Abstand zwischen den ausgezeichneten Fassungspunkten herangezogen.

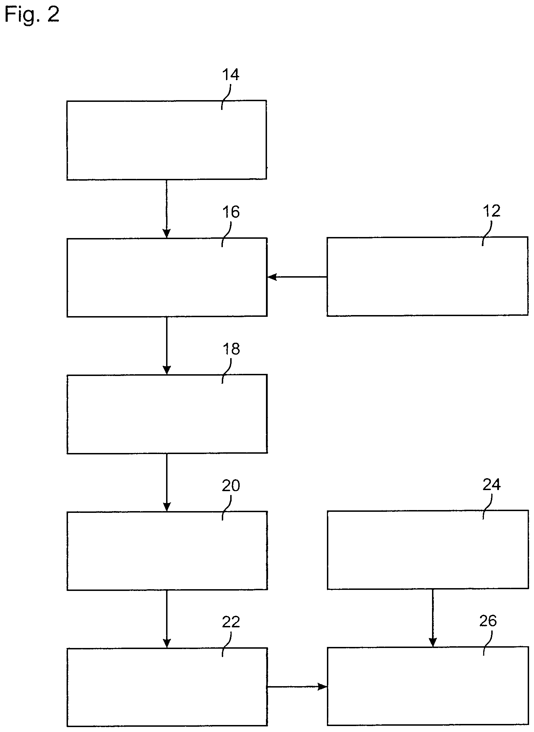

**Fig. 2** veranschaulicht ein Verfahren gemäß einer zweiten bevorzugten Ausführungsform. Zusätzlich zu den oben beschriebenen Schritten gemäß **Fig. 1** werden erfolgt nach der Ermittlung (18) der individuellen Parameter der Gebrauchsstellung eine Optimierung des Brillenglases (20). Nach dem Optimieren wird das Brillenglas entsprechend dem Optimierungsergebnis insbesondere durch einen Brillenglashersteller geschliffen, d.h. zumindest eine optische Fläche (Vorderfläche und/oder Rückfläche) wird vorzugsweise entsprechend dem Optimierungsergebnis individuell angepasst (22).

In einer zu **Fig. 2** alternativen bevorzugten Ausführungsform ist es nicht notwendig, dass das Brillenglas individuell optimiert und gefertigt wird. Vielmehr kann auf Basis der verbesserten Ermittlung der Gebrauchsstellung auf in genauer angepasster Weise auf vorgefertigte Brillengläser zurückgegriffen werden. In diesem Fall wird insbesondere auf Basis der individuell ermittelten Gebrauchsstellung ein geeignetes, nicht gerandetes Brillenglas für den Benutzer (50) und die gewählte Fassung bereitgestellt, indem es beispielsweise aus einem vorgefertigten Satz von Brillengläsern entsprechend der ermittelten Gebrauchsstellung ausgewählt wird.

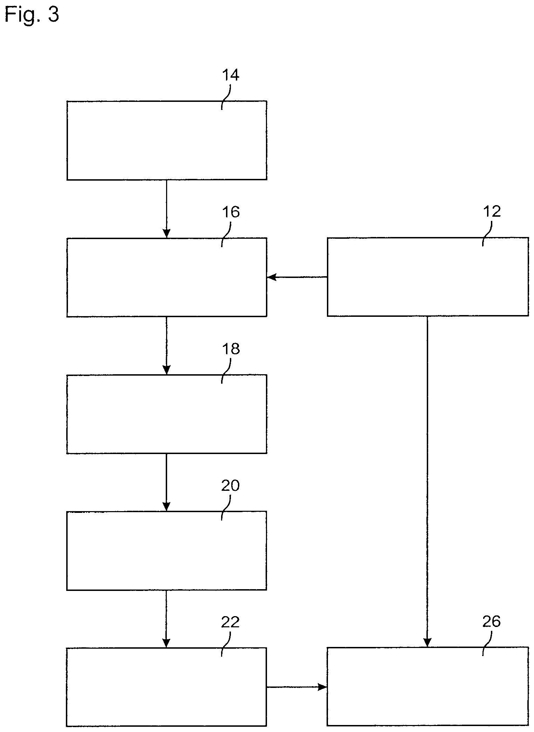

Unabhängig davon, ob es sich um individuell optimiertes und gefertigtes Brillenglas oder lediglich ein vorgefertigtes und nach der ermittelten Gebrauchsstellung der ausgewählten Brillenfassung (32) ausgewähltes Brillenglas handelt, erfolgt anschließend ein Randen (26) des Glases. Gemäß der bevorzugten Ausführungsform in **Fig. 2** werden für das Randen zusätzliche Tracerdaten zur ausgewählten Brillenfassung (32) mit Hilfe eines Tracers mechanisch oder optisch erzeugt und bereitgestellt. Gemäß der bevorzugten Ausführungsform in **Fig. 3** werden die für das Randen benötigten Tracerdaten direkt aus dem Brillenfassungsdatensatz ermittelt, was die separate Anwendung eines Tracers entbehrlich macht.

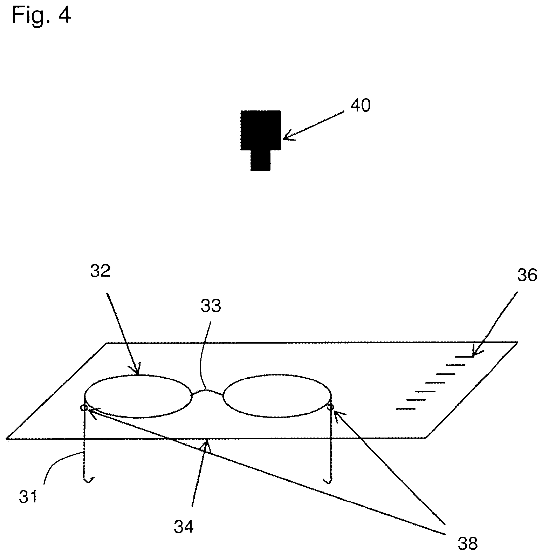

**Fig. 4** zeigt eine schematische Darstellung einer bevorzugten Ausführungsform einer Brillenfassungsbilddatenerfassungseinrichtung. Die Brillenfassungsbilddatenerfassungseinrichtung umfasst eine Bildhintergrundfläche bzw. eine Hintergrundplatte (34) mit einer Skalierung (36), die z.B. als Metermaß, Markierungen bestimmter Größe, ein oder mehrerer bekannte Muster usw. realisiert sein kann. In der Hintergrundplatte (34) sind Öffnungen ausgebildet, die als Befestigungsmittel bzw. Halterungen (38) der Brillenfassung (32) dienen. Durch die Öffnungen können die Bügel der Brille durchhängen, so dass die Brillenfassung (32) dadurch fixiert ist. Mit Hilfe einer Kamera (40), beispielsweise eine Digitalkamera, eine Kamera eines Tablets bzw. eines iPads, eine Webcam, eine Handykamera, etc., kann ein Bild der Brillenfassung (32) aufgenommen und ein Brillenfassungsbilddatensatz erzeugt werden.

Aus dem Brillenfassungsbilddatensatz kann der Rand und/oder die Farbe der Brillenfassung (32) erfasst werden. Aufgrund der an der Hintergrundplatte (34) angebrachten Skalierung (36) erhält man das genaue Maß der Brillenfassung (32). Diese Informationen kann schließlich in einem Benutzerbild eines Benutzers (50), welcher die Brille trägt, verwendet werden, um die Brillenfassung (32) im Benutzerbild zu finden (z.B. nach Farbe und Form). Aus den bekannten Größenmaßen der Brillenfassung (32) kann z.B. die Pupillendistanz gemessen werden, indem die Pupillen ausgewählt oder automatisch gefunden werden und über die Skalierung (36) im Brillenfassungsbilddatensatz der Abstand ermittelt wird. Insbesondere kann also die Brille selbst als Skalierung verwendet werden und so einen Aufsatz ersetzen, der herkömmlicherweise verwendet wird.

Die Aufnahme der Brillenfassung (32) erfolgt mit mindestens einer Kamera (40). Die Aufnahme kann dabei zweidimensional oder dreidimensional erfolgen. Erfolgt die Aufnahme der Fassung zweidimensional, wird die Kamera (40) so positioniert, dass in ihrem Bildfeld die gesamte Brillenfassung (32) zu liegen kommt. Die Brillenfassung (32) wird insbesondere derart positioniert, dass die Brillenglasebene im Wesentlichen senkrecht zur optischen Achse der Kamera (40). Bei einer dreidimensionalen Erfassung kann für eine zweite oder weitere Kamera davon abgewichen werden. Eine dreidimensionale Erfassung kann auch mit nur einer Kamera (40) erfolgen, indem Aufnahmen unter verschiedenen Blickwinkeln gemacht werden. Dazu kann z.B. das aufzunehmende Objekt gedreht werden.

Der Hintergrund aus Sicht der Kamera (40) hinter der Brillenfassung (32) ist so gewählt, dass sich die Fassung von diesem in einer Eigenschaft, die in den Bilddaten vorliegt, deutlich unterscheidet (z.B. Helligkeit, Phase, Farbe, etc.). Der Hintergrund kann dabei homogen sein. Zur optimalen Beleuchtung kann der Hintergrund selbst eine Lichtquelle sein (z.B. Leuchtplatte). Der Hintergrund kann jedoch auch strukturiert sein und diese Struktur zusätzlich zeitlich veränderbar sein. Die Kombination verschiedener Aufnahmen mit unterschiedlichen Hintergründen kann zur Erstellung eines kombinierten Bildes genutzt werden, in dem geeignetere Eigenschaften zur Unterscheidung der Fassung vorhanden sind (z.B. Phasenkontrast) oder in der Eigenschaften stärker zum Vorschein kommen (z.B. Erweiterung des Dynamikbereiches der Kamera (40) durch eine Belichtungsreihe).

Zusätzlich kann eine Beleuchtung (in den Figuren nicht gezeigt) eingesetzt werden, welche kameraseitig die Fassung strukturiert beleuchtet. Aus der bekannten Information der Struktur der Beleuchtung und der detektierten Beleuchtung in der Brillenfassungsbildaufnahmeeinrichtung können Informationen über die Lage der Brillenfassung (32) erlangt werden. Diese Beleuchtung kann z.B. durch einen oder mehrere Laserstrahlen realisiert werden die entweder örtlich fest oder mit definierter Geschwindigkeit festgelegte Punkte ansteuern. Zur Bestimmung absoluter Größen in der Aufnahme kann entweder der Abstand der Brillenfassung (32) konstant gehalten werden und durch eine vorhergehende Kalibrierung der Kamera (40) für diesen Abstand die Differenz einer Anzahl von Bildpunkten ein absoluter Abstand zugeordnet werden. Oder es kann als weiterer Bestandteil in der Aufnahme eine Skala sichtbar sein, die den gleichen Abstand zur Bildaufnahmeeinrichtung wie die Brillenfassung (32) besitzt. Aus der Extraktion der Maßstabsmarkierungen und des bekannten, absoluten Abstands kann ein Abstand in einer Anzahl von Bildpunkten in einen absoluten Abstand umgerechnet werden.

Die in dieser Art vorliegenden Aufnahmen können mit Bildverarbeitung zur Suche der Brillenfassung (32) verwendet werden.

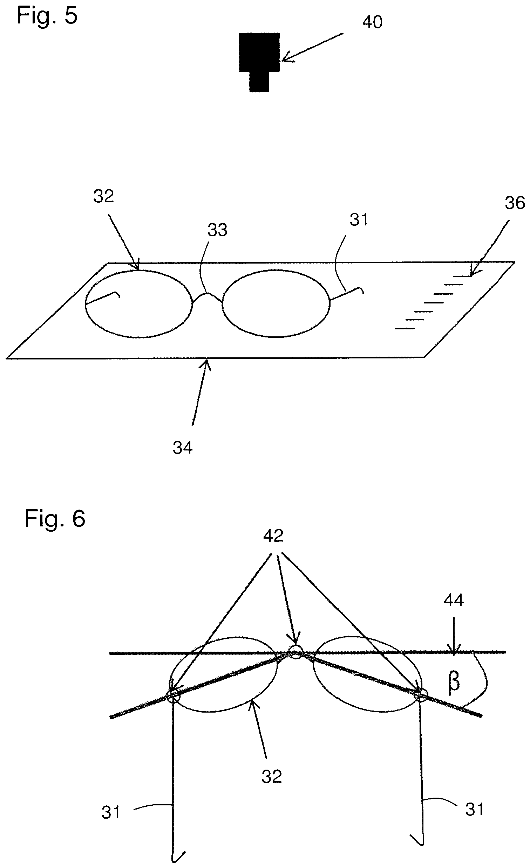

**Fig. 5** zeigt eine schematische Darstellung einer bevorzugten Ausführungsform einer Brillenfassungsbilddatenerfassungseinrichtung, wobei die Brillenfassung (32) mit ausgeklappten Bügeln derart auf der Hintergrundplatte (34) angeordnet ist, dass die Brillenglasebene im Wesentlichen parallel zur optischen Achse der Kamera (40) ausgerichtet ist. Durch Fotografieren der Brillenfassung (32) in dieser Anordnung kann aus dem aufgenommenen Bild der Fassungsscheibenwinkel β (44) bestimmt werden. Die Bestimmung des Fassungsscheibenwinkel β (44) kann anhand des erfassten und visuell an einem Monitor dargestellten Brillenfassungsbilddatensatzes insbesondere dadurch erfolgen, dass der Optiker bestimmte Punkte des Brillenfassungsbilddatensatzes auswählt bzw. anklickt. Durch Auswählen dieser Klickpositionen (42) im Bild kann schließlich der Fassungsscheibenwinkel (44) automatisch berechnet und ausgegeben werden.

Eine entsprechende schematische Zeichnung der visuellen Darstellung der Brillenfassung anhand eines aufgenommenen Brillenfassungsbilddatensatzes zeigt **Fig. 6****.** Durch Auswählen bzw. Anklicken der in **Fig. 6** dargestellten drei Klickpositionen (42) kann der Fassungsscheibenwinkel β (44) ermittelt werden. Als die drei Klickpositionen eignen sich insbesondere die beiden Schnittpunkte der Bügel mit dem Brillenfassungsrand sowie der Brillenfassungsmittelpunkt in der Brillenglasebene. Die Klickpositionen können manuell z.B. vom Optiker angeklickt werden oder aber auch automatisch mittels Bilderkennung bestimmt werden.

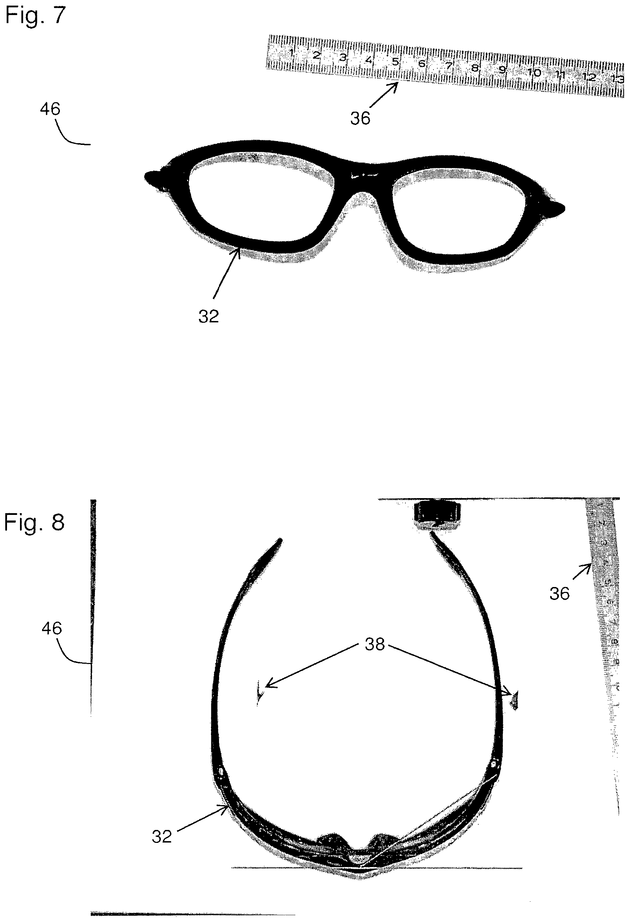

In den **Figuren 7 und 8** sind jeweils photographische Aufnahmen als Beispiel einer visuellen Darstellung (46) des für eine ausgewählte Brillenfassung (32) aufgenommenen Brillenfassungsbilddatensatzes gezeigt. In **Fig. 8** sind neben einem Metermaß als Skalierung (36) auch zwei Öffnungen (38) zum Fixieren der Brillenfassung zu erkennen. Zusätzlich sind im Bild der **Fig. 8** Linien dargestellt, die der Bestimmung des Fassungsscheibenwinkels (44) dienen.

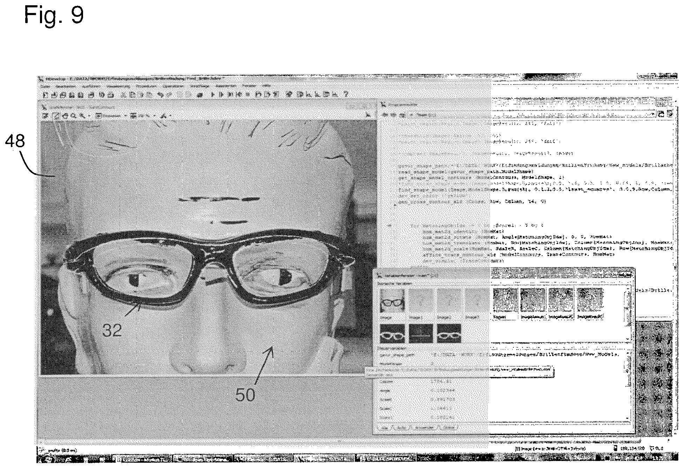

**Fig. 9** zeigt eine photographische Aufnahme als Beispiel der visuellen Darstellung (48) eines Benutzerbilddatensatzes, bei der insbesondere der Benutzer (50) mit der getragenen, ausgewählten Brillenfassung (32) zu sehen ist.

### Bezugszeichenliste

- 12: Bereitstellen eines Brillenfassungsbilddatensatzes
- 14: Erfassen von Benutzerbilddaten, Aufsuchen der Pupillen des Benutzers in den Benutzerbilddaten, und Ermitteln eines Pupillendatensatzes
- 16: Ermitteln von Konturpunkten
- 18: Ermitteln der individuellen Gebrauchsstellung
- 20: Optimieren des herzustellenden Brillenglases
- 22: Fertigen des optimierten Brillenglases
- 24: Bereitstellen eines Tracerdatensatzes
- 26: Randen des gefertigten Brillenglases
- 31: Brillenbügel
- 32: Brillenfassung / Brille
- 33: Steg der Brillenfassung
- 34: Hintergrundplatte (Bildhintergrundfläche)
- 36: Skalierung (Metermaß, Markierungen bestimmter Größe, bekanntes Muster)
- 38: Befestigungsmittel / Halterung
- 40: Kamera (Digitalkamera, Kamera im Tablet, Webcam, Handykamera)
- 42: Klickpositionen im Bild
- 44: Fassungsscheibenwinkel
- 46: Visuelle Darstellung eines Brillenfassungsbilddatensatzes
- 48: Visuelle Darstellung eines Benutzerbilddatensatzes
- 50: Benutzer

## Patentansprüche

1. Verfahren zum Ermitteln von Benutzerdaten für die Herstellung eines individuellen Brillenglases zu einer ausgewählten Brillenfassung (32) für einen Benutzer (50), umfassend:
- Bereitstellen (12) eines Brillenfassungsbilddatensatzes (46) der ausgewählten Brillenfassung;
- Erfassen (14) von Benutzerbilddaten zumindest eines Teilbereichs des Kopfes des Benutzers (50) zusammen mit zumindest einem Teil der vom Benutzer getragenen, ausgewählten Brillenfassung (32);
- Aufsuchen der Pupillen des Benutzers in den Benutzerbilddaten und Ermitteln eines Pupillendatensatzes, wobei der Pupillendatensatz die Größe und/oder die Form und/oder den relativen Abstand der Pupillen des Benutzers umfasst; und
- Ermitteln (16) von Konturpunkten des Randes des zu fertigenden Brillenglases in den Benutzerbilddaten anhand des Brillenfassungsbilddatensatzes und des Pupillendatensatzes;
wobei das Ermitteln eines Pupillendatensatzes ein Detektieren des Pupillenabstands umfasst und wobei das Ermitteln (16) von Konturpunkten des Randes des zu fertigenden Brillenglases mit Hilfe eines Skalierungsfaktors erfolgt, welcher anhand eines Vergleichs des detektierten Pupillenabstandes mit einer Standardvorgabe für den Pupillenabstand abgeschätzt wird.

2. Verfahren nach Anspruch 1, wobei das Ermitteln (16) von Konturpunkten des Randes des zu fertigenden Brillenglases ein Aufsuchen des Stegs der Brillenfassung in den Benutzerbilddaten anhand des Brillenfassungsbilddatensatzes umfasst.

3. Verfahren nach einem der vorangegangenen Ansprüchen, welches ferner umfasst:
- Ermitteln zumindest eines ausgezeichneten Punktes eines Auges des Benutzers (50) aus den Benutzerbilddaten; und
- Ermitteln (18) von individuellen Parametern der Gebrauchsstellung aus der Lage der ermittelten Konturpunkte des Randes des zu fertigenden Brillenglases relativ zu dem zumindest einen ausgezeichneten Punkt.

4. Verfahren nach einem der vorangegangenen Ansprüchen,
wobei das Bereitstellen (12) eines Brillenfassungsbilddatensatzes der ausgewählten Brillenfassung (32) ein Erfassen von Bilddaten der ausgewählten Brillenfassung vor einer vorgegebenen Bildhintergrundfläche (34) umfasst,
wobei das Bereitstellen (12) eines Brillenfassungsbilddatensatzes der ausgewählten Brillenfassung (32) vorzugsweise ein Bestimmen der Abmessung von zumindest Teilen der Brillenfassung anhand einer Skalierung umfasst.

5. Verfahren nach Anspruch 4, wobei die ausgewählte Brillenfassung (32) Musterstützscheiben und/oder Mustergläser enthält und wobei zum Erfassen der Bilddaten der ausgewählten Brillenfassung (32) die Brillenfassung mit Licht beleuchtet wird, welches von den Musterstützscheiben und/oder den Mustergläsern der Brillenfassung (32) erkennbar absorbiert wird.

6. Verfahren nach Anspruch 4 oder 5, wobei das Erfassen der Bilddaten der ausgewählten Brillenfassung (32) mit Hilfe von zumindest einer Kamera (40) aus unterschiedlichen Winkeln erfolgt.

7. Verfahren nach einem der vorangegangenen Ansprüche, wobei das Erfassen (14) von Benutzerbilddaten umfasst:
- Erfassen eines ersten Benutzerbilddatensatzes, welcher zumindest einen Teilbereich des Kopfes des Benutzers (50) zusammen mit zumindest einem Teil der vom Benutzer (50) getragenen, ausgewählten Brillenfassung (32) in einer ersten Aufnahmerichtung darstellt; und
- Erfassen eines zweiten Benutzerbilddatensatzes, welcher zumindest einen Teilbereich des Kopfes des Benutzers (50) zusammen mit zumindest einem Teil der vom Benutzer (50) getragenen, ausgewählten Brillenfassung (32) in einer zweiten Aufnahmerichtung darstellt.

8. Verfahren nach Anspruch 7, wobei das Ermitteln (18) von individuellen Parametern der Gebrauchsstellung umfasst:
- Ermitteln einer dreidimensionalen Position des zumindest einen ausgezeichneten Punktes des Auges anhand des ersten und zweiten Benutzerbilddatensatzes; und
- Ermitteln von dreidimensionalen Positionen der Konturpunkte des Randes des zu fertigenden Brillenglases anhand des ersten und zweiten Benutzerbilddatensatzes.

9. Verfahren nach einem der vorangegangenen Ansprüchen, welches außerdem ein Anzeigen der Benutzerbilddaten zusammen mit den ermittelten Konturpunkten umfasst.

10. Vorrichtung zum Ermitteln von Benutzerdaten für die Herstellung eines individuellen Brillenglases zu einer ausgewählten Brillenfassung für einen Benutzer (50), umfassend:
- einen Datenspeicher zum Speichern eines Brillenfassungsbilddatensatzes;
- eine Benutzerbilderfassungseinrichtung zum Erfassen von Benutzerbilddaten zumindest eines Teilbereichs des Kopfes des Benutzers (50) zusammen mit der vom Benutzer (50) getragenen, ausgewählten Brillenfassung (32); und
- eine Auswerteeinrichtung zum Aufsuchen der Pupillen des Benutzers, zum Ermitteln eines Pupillendatensatzes und zum Ermitteln von Konturpunkten des Randes des zu fertigenden Brillenglases in den Benutzerbilddaten anhand des Brillenfassungsbilddatensatzes und des Pupillendatensatzes, wobei der Pupillendatensatz die Größe und/oder die Form und/oder den relativen Abstand der Pupillen des Benutzers umfasst, und wobei das Ermitteln eines Pupillendatensatzes ein Detektieren des Pupillenabstands umfasst und wobei das Ermitteln (16) von Konturpunkten des Randes des zu fertigenden Brillenglases mit Hilfe eines Skalierungsfaktors erfolgt, welcher anhand eines Vergleichs des detektierten Pupillenabstandes mit einer Standardvorgabe für den Pupillenabstand abgeschätzt wird.

11. Vorrichtung nach Anspruch 10, ferner umfassend eine Brillenfassungsbilderfassungseinrichtung zum Erfassen des Brillenfassungsbilddatensatzes der ausgewählten Brillenfassung (32).

12. Vorrichtung nach Anspruch 11, wobei
die Brillenfassungsbilderfassungseinrichtung eine Bildhintergrundfläche (34), vor welcher die ausgewählte Brillenfassung (32) angeordnet werden kann, sowie Befestigungsmittel (38) für die ausgewählte Brillenfassung (32) aufweist, und/oder wobei
die Brillenfassungsbilderfassungseinrichtung eine Skalierung aufweist, und/oder wobei
die Brillenfassungsbilderfassungseinrichtung zumindest eine Kamera (40) und Beleuchtungsmittel umfasst.

13. Vorrichtung nach einem der Ansprüche 10 bis 12, welche außerdem eine Bildanzeigeeinrichtung zum Ausgeben der Benutzerbilddaten zusammen mit den ermittelten Konturpunkten an den Benutzer (50) umfasst.

14. Computerprogrammprodukt umfassend computerlesbare Anweisungen, welche, wenn geladen in einen Speicher eines Computers und ausgeführt von dem Computer, bewirken, dass der Computer ein Verfahren gemäß einem der Ansprüche 1 bis 9 durchführt.

## Claims

1. A method of obtaining user data for the manufacture of a custom eyeglass lens to a selected eyeglass frame (32) for a user (50), comprising:
- Providing (12) an eyeglass frame image data set (46) of the selected eyeglass frame;
- Capturing (14) user image data of at least one portion of the user's (50) head along with at least one portion of the selected eyeglass frame (32) worn by the user;
- Locating the pupils of the user in the user image data and determining a pupil data set, the pupil data set comprising the size and/or shape and/or relative distance of the pupils of the user; and
- Determining (16) of contour points of the edge of the eyeglass lens to be manufactured in the user image data based on the eyeglass frame image data set and the pupil data set;
wherein determining a pupil data set comprises detecting the pupil distance, and wherein determining (16) contour points of the edge of the eyeglass lens to be manufactured is performed by means of a scaling factor which is estimated based on a comparison of the detected pupil distance with a standard default for the pupil distance.

2. Method according to claim 1, wherein determining (16) of contour points of the edge of the spectacle lens to be manufactured comprises locating the ridge of the spectacle frame in the user image data using the spectacle frame image data set.

3. Method according to any one of the preceding claims, further comprising:
- Determining at least one distinguished point of an eye of the user (50) from the user image data; and
- Determining (18) individual parameters of the position of use from the location of the determined contour points of the edge of the eyeglass lens to be manufactured relative to the at least one distinguished point.

4. Method according to any one of the preceding claims, wherein providing (12) an eyeglass frame image data set of the selected eyeglass frame (32) comprises capturing image data of the selected eyeglass frame in front of a predetermined image background surface (34),
wherein providing (12) an eyeglass capture image data set of the selected eyeglass frame (32) preferably comprises determining the dimension of at least parts of the eyeglass frame based on a scaling.

5. Method according to claim 4, wherein the selected spectacle frame (32) comprises pattern support lenses and/or pattern lenses and wherein for capturing the image data of the selected spectacle frame (32) the spectacle frame is illuminated with light which is recognizably absorbed by the pattern support lenses and/or the pattern lenses of the spectacle frame (32).

6. Method according to claim 4 or 5, wherein the capturing of the image data of the selected spectacle frame (32) is performed by means of at least one camera (40) from different angles.

7. method according to any one of the preceding claims, wherein capturing (14) user image data comprises:
- Acquiring a first user image data set representing at least one portion of the head of the user (50) together with at least one portion of the selected eyeglass frame (32) worn by the user (50) in a first acquisition direction; and
- Capturing a second user image data set representing at least one partial area of the head of the user (50) along with at least one portion of the selected eyeglass frame (32) worn by the user (50) in a second capture direction.

8. Method according to claim 7, wherein determining (18) of individual parameters of the position of use comprises:
- Determining a three-dimensional position of the at least one distinguished point of the eye based on the first and second user image data sets; and
- Determining three-dimensional positions of contour points of the rim of the eyeglass lens to be manufactured based on the first and second user image data sets.

9. Method according to any one of the preceding claims, further comprising displaying the user image data together with the determined contour points.

10. Apparatus for determining user data for the manufacture of a customized eyeglass lens to a selected eyeglass frame for a user (50), comprising:
- a data memory for storing an eyeglass frame image data set;
- user image capture means for capturing user image data of at least a portion of the head of the user (50) together with the selected eyeglass frame (32) worn by the user (50); and
- evaluation means for searching the pupils of the user, obtaining a pupil data set, and obtaining contour points of the edge of the spectacle frame to be manufactured in the user image data based on the spectacle frame image data set and the pupil data set, wherein the pupil data set comprises the size and/or the shape and/or the relative distance of the pupils of the user, and wherein the determining (16) of contour points of the edge of the spectacle lens to be produced is carried out with the aid of a scaling factor which is estimated on the basis of a comparison of the detected pupil distance with a standard specification for the pupil distance.

11. Apparatus according to claim 10, further comprising an eyeglass frame image capturing device for capturing the eyeglass frame image data set of the selected eyeglass frame (32).

12. Apparatus according to claim 11, wherein
said eyeglass frame image capturing device comprises an image background surface (34) in front of which said selected eyeglass frame (32) can be placed, and fastening means (38) for said selected eyeglass frame (32), and/or wherein
the spectacle frame image capturing device comprises a scaling, and/or wherein
the spectacle frame image capturing device comprises at least one camera (40) and illumination means.

13. Apparatus according to any one of claims 10 to 12, further comprising image display means for outputting the user image data together with the detected contour points to the user (50).

14. A computer program product comprising computer-readable instructions which, when loaded into a memory of a computer and executed by the computer, cause the computer to perform a method according to any one of claims 1 to 9.

## Revendications

1. Procédé pour obtenir des données utilisateur pour la fabrication d'un verre de lunettes personnalisé pour une monture de lunettes sélectionnée (32) pour un utilisateur (50), comprenant :
- fournir (12) un ensemble de données d'image de monture de lunettes (46) de la monture de lunettes sélectionnée ;
- acquérir (14) des données d'image d'utilisateur d'au moins une partie de la tête de l'utilisateur (50) avec au moins une partie de la monture de lunettes sélectionnée (32) portée par l'utilisateur ;
- localiser les pupilles de l'utilisateur dans les données d'image de l'utilisateur et déterminer un ensemble de données de pupilles, l'ensemble de données de pupilles comprenant la taille et/ou la forme et/ou la distance relative des pupilles de l'utilisateur ; et
- déterminer (16) des points de contour du bord du verre de lunettes à fabriquer dans les données d'image d'utilisateur à partir de l'ensemble de données d'image de monture de lunettes et de l'ensemble de données de pupille ;
dans lequel la détermination d'un ensemble de données de pupille comprend la détection de l'écart pupillaire et dans lequel la détermination (16) des points de contour du bord de la lentille à produire est effectuée au moyen d'un facteur d'échelle estimé à partir d'une comparaison de l'écart pupillaire détecté avec un écart pupillaire standard par défaut.

2. Procédé selon la revendication 1, dans lequel la détermination (16) des points de contour du bord du verre de lunettes à produire comprend la localisation de la crête de la monture de lunettes dans les données d'image de l'utilisateur en utilisant l'ensemble de données d'image de la monture de lunettes.

3. Procédé selon l'une quelconque des revendications précédentes, comprenant en outre :
- déterminer au moins un point distingué d'un œil de l'utilisateur (50) à partir des données d'image de l'utilisateur ; et
- déterminer (18) de paramètres individuels de la position d'utilisation à partir de la position des points de contour déterminés du bord du verre de lunettes à fabriquer par rapport à l'au moins un point distingué.

4. Procédé selon l'une quelconque des revendications précédentes, dans lequel la fourniture (12) d'un ensemble de données d'image de monture de lunettes de la monture de lunettes sélectionnée (32) comprend la capture de données d'image de la monture de lunettes sélectionnée devant une surface d'arrière-plan d'image prédéterminée (34),
dans lequel la fourniture (12) d'un ensemble de données d'image de capture de lunettes de la monture de lunettes sélectionnée (32) comprend de préférence la détermination de la dimension d'au moins des parties de la monture de lunettes sur la base d'une échelle.

5. Procédé selon la revendication 4, dans lequel la monture de lunettes sélectionnée (32) comprend des lentilles de support de motif et/ou des lentilles de motif, et dans lequel pour capturer les données d'image de la monture de lunettes sélectionnée (32), la monture de lunettes est éclairée avec de la lumière qui est absorbée de manière reconnaissable par les lentilles de support de motif et/ou les lentilles de motif de la monture de lunettes (32).

6. Procédé selon la revendication 4 ou 5, dans lequel la capture des données d'image de la monture de lunettes sélectionnée (32) est effectuée au moyen d'au moins une caméra (40) sous différents angles.

7. Procédé selon l'une quelconque des revendications précédentes, dans lequel la capture (14) de données d'image utilisateur comprend :
- acquérir un premier ensemble de données d'image d'utilisateur représentant au moins une zone partielle de la tête de l'utilisateur (50) avec au moins une partie de la monture de lunettes sélectionnée (32) portée par l'utilisateur (50) dans une première direction d'acquisition ; et
- acquérir un second ensemble de données d'image d'utilisateur représentant au moins une zone partielle de la tête de l'utilisateur (50) conjointement avec au moins une partie de la monture de lunettes sélectionnée (32) portée par l'utilisateur (50) dans une seconde direction d'acquisition.

8. Procédé selon la revendication 7, dans lequel la détermination (18) des paramètres individuels de la position d'utilisation comprend :
- déterminer une position tridimensionnelle de l'au moins un point distingué de l'œil sur la base des premier et second ensemble de données d'image d'utilisateur ; et
- déterminer des positions tridimensionnelles de points de contour du bord du verre de lunettes à fabriquer sur la base des premier et second ensemble de données d'image d'utilisateur.

9. Procédé selon l'une quelconque des revendications précédentes, comprenant en outre l'affichage des données d'image de l'utilisateur avec les points de contour déterminés.

10. Appareil pour déterminer des données d'utilisateur pour produire un verre de lunettes personnalisé à une monture de lunettes sélectionnée pour un utilisateur (50), comprenant :
- une mémoire de données pour stocker un ensemble de données d'image de monture de lunettes ;
- un moyen de capture d'image d'utilisateur pour capturer des données d'image d'utilisateur d'au moins une partie de la tête de l'utilisateur (50) avec la monture de lunettes sélectionnée (32) portée par l'utilisateur (50) ; et
- des moyens d'évaluation pour rechercher les pupilles de l'utilisateur, déterminer un ensemble de données de pupilles, et déterminer des points de contour du bord de la monture de lunettes à produire dans les données d'image de l'utilisateur sur la base de l'ensemble de données d'image de la monture de lunettes et de l'ensemble de données de pupilles, dans lequel l'ensemble de données de pupilles comprend la taille et/ou la forme et/ou la distance relative des pupilles de l'utilisateur, et dans lequel la détermination (16) des points de contour du bord du verre de lunettes à produire est effectuée à l'aide d'un facteur d'échelle qui est estimé sur la base d'une comparaison de l'écart pupillaire détecté avec une spécification standard pour l'écart pupillaire.

11. Appareil de la revendication 10, comprenant en outre un moyen d'acquisition d'image de monture de lunettes pour acquérir l'ensemble de données d'image d'acquisition de lunettes de la monture de lunettes sélectionnée (32).

12. Appareil selon la revendication 11, dans lequel
- le dispositif de capture d'images de capture de lunettes comprend une surface de fond d'image (34) devant laquelle la monture de lunettes sélectionnée (32) peut être placée, et des moyens de fixation (38) pour la monture de lunettes sélectionnée (32), et/ou dans lequel
- le dispositif de capture d'image de la monture de lunettes comprend une mise à l'échelle, et/ou dans lequel
- le dispositif de capture d'images pour l'acquisition de lunettes comprend au moins une caméra (40) et des moyens d'éclairage.

13. Appareil selon l'une quelconque des revendications 10 à 12, comprenant en outre des moyens d'affichage d'image pour délivrer à l'utilisateur (50) les données d'image de l'utilisateur ainsi que les points de contour détectés.

14. Produit de programme informatique comprenant des instructions lisibles par ordinateur qui, lorsqu'elles sont chargées dans une mémoire d'un ordinateur et exécutées par l'ordinateur, amènent l'ordinateur à exécuter un procédé selon l'une quelconque des revendications 1 à 9.
